(19) **Europäisches Patentamt / European Patent Office / Office européen des brevets**

(11) **EP 4 478 302 A1**

(12) **EUROPEAN PATENT APPLICATION**

(43) Date of publication:
**18.12.2024 Bulletin 2024/51**

(21) Application number: **24181379.9**

(22) Date of filing: **11.06.2024**

(51) International Patent Classification (IPC):
**G06V 10/82** (2022.01)     **G06V 20/40** (2022.01)
**G06V 20/52** (2022.01)

(52) Cooperative Patent Classification (CPC):
**G06V 20/46; G06V 10/82; G06V 20/41; G06V 20/52**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.06.2023 KR 20230074826**

(71) Applicant: **Thinkware Corporation**
**Seongnam-si, Gyeonggi-do 13493 (KR)**

(72) Inventors:
• **SHIN, Dongwon**
**Seongnam-si, Gyeonggido (KR)**
• **HAN, Taekyu**
**Seongnam-si, Gyeonggido (KR)**

(74) Representative: **BCKIP Part mbB**
**Siegfriedstraße 8**
**80803 München (DE)**

(54) **ELECTRONIC DEVICE FOR TRACKING EXTERNAL OBJECT AND METHOD THEREOF**

(57)     An electronic device according to an embodiment may identify a first position associated with an external object in a first image at a first timing among a plurality of images for a video. The processor may identify, based on the first position, a second position associated with the external object, within a second image at a second timing after the first timing from the plurality of images. The processor may obtain, based on the first position and the second position, one or more third positions associated with the external object and corresponding to one or more third images included in a time section between the first timing and the second timing. The processor may store, as labeling information indicating motion of the external object, the first position, the one or more third positions, and the second position.

IDENTIFY A PLURALITY OF IMAGES FOR A VIDEO — 310

IDENTIFY A FIRST POSITION RELATED TO AN EXTERNAL OBJECT IN A FIRST IMAGE AT A FIRST TIMING AMONG THE PLURALITY OF IMAGES — 320

IDENTIFY A SECOND POSITION RELATED TO AN EXTERNAL OBJECT IN A SECOND IMAGE AT A SECOND TIMING AFTER THE FIRST TIMING AMONG THE PLURALITY OF IMAGES, BASED ON THE FIRST POSITION — 330

OBTAIN ONE OR MORE THIRD POSITIONS RELATED TO THE EXTERNAL OBJECT AND CORRESPONDING TO ONE OR MORE THIRD IMAGES INCLUDED IN A TIME SECTION BETWEEN THE FIRST TIMING AND THE SECOND TIMING, BASED ON THE FIRST POSITION AND THE SECOND POSITION — 340

STORE THE FIRST POSITION, ONE OR MORE THIRD POSITIONS, AND THE SECOND POSITION, AS LABELING INFORMATION INDICATING A MOTION OF AN EXTERNAL OBJECT IDENTIFIED IN THE TIME SECTION OF THE VIDEO — 350

FIG. 3

EP 4 478 302 A1

Description

## TECHNICAL FIELD

The present disclosure relates to an electronic device for tracking an external device from a video and a method thereof.

## BACKGROUND ART

Along with the development of image object recognition technologies, various types of services have been emerged. These services may be used for implementing automatic driving, augmented reality, virtual reality, metaverse, or the like and may be provided through electronic devices owned by different users, such as smartphones. The services may be related to hardware and/or software mechanism that mimic human behavior and/or thinking, such as artificial intelligence (AI). The technology related to artificial intelligence may involve techniques utilizing a neural network that simulates a neural network in living organisms.

## DISCLOSURE

Technical Problem

For reproducing a video, a method for more quickly identifying locations of an external object commonly captured from images (e.g., frames) included in the video has been studied.

Technical Solution

According to an embodiment, an electronic device may include memory and a processor. The processor may be configured to identify, from the memory, a first position associated with an external object, among a plurality of images for a video and a first image at a first timing from the plurality of images. The processor may be configured to identify, based on the first position within the first image, a second position associated with the external object within a second image at a second timing after the first timing from the plurality of images. The processor may be configured to obtain, based on the first position and the second position, one or more third positions associated with the external object, corresponding to one or more third images included in a time section between the first timing and the second timing. The processor may be configured to store, as labeling information indicating motion of the external object identified in the time section of the video, the first position, the one or more third positions, and the second position.

According to an embodiment, a method of an electronic device may include identifying, from memory of the electronic device, a first position associated with an external object, among a plurality of images for a video and a first image at a first timing from the plurality of images. The method may include identifying, based on the first position within the first image, a second position associated with the external object within a second image at a second timing after the first timing from the plurality of images. The method may include obtaining, based on the first position and the second position, one or more third positions associated with the external object, corresponding to one or more third images included in a time section between the first timing and the second timing. The method may include storing, as labeling information indicating motion of the external object identified in the time section of the video, the first position, the one or more third positions, and the second position.

According to an embodiment, an electronic device may include a display, memory and a processor. The processor may be configured to identify, in a state displaying a first image of video stored in the memory in the display, a first input indicating to select a first position associated with an external object within the first image. The processor may be configured to identify, by performing a first type of computation for recognizing the external object based on the first input, a second position associated with the external object within the second image, among a plurality of images for the video, after a time section beginning from a timing at the first image. The processor may be configured to obtain, by performing a second type of computation for interpolating the first position and the second position, third positions associated with the external object within one or more third images included in the time section. The processor may be configured to display, in response to a second input indicating to reproduce at least a portion of the video included in the time section, at least one of the first image, the one or more third images and the second image in the display, and display a visual object that is superimposed on an image displayed in the display and corresponds to one of the first position, the third positions and the second position

According to an embodiment, a method of an electronic device may include identifying a first input indicating selection of a first position associated with an external object in a first image, in a state of displaying a first image of a video stored in a memory of the electronic device on a display of the electronic device. The method may include identifying a second position associated with an external object in a second image after a time section beginning from a timing of the first image, among a plurality of images for the video, by performing a first type of computation for recognizing the external object, based on the first input. The method may include obtaining third positions associated with the external object in one or more third images included in the time section, by performing a second type of computation for interpolating the first position and the second position. The method may include displaying any one of the first image, the one or more third images, and the second image on the display in response to a second input indicating reproduction of at least a portion of the video included in the time section, and displaying a visual object corresponding to any one of the first position, the third positions, or the second position as superimposed on the image displayed on the display.

Advantageous Effects

The electronic device according to an embodiment may obtain labeling information to be used for training a model for object recognition, from a video including a plurality of sequentially recorded images.

The electronic device according to an embodiment may more quickly obtain labeling information including positions of visual objects included in each of a plurality of images included in a video.

BRIEF DESCRIPTION OF THE DRAWINGS

The above and other aspects, features, and advantages of certain embodiments of the disclosure will be more apparent from the following description, taken in conjunction with the accompanying, in which:

FIGS. 1A and 1B illustrate an example of an operation of obtaining labeling information by an electronic device according to an embodiment;
FIG. 2 illustrates an example of a block diagram of an electronic device according to an embodiment;
FIG. 3 illustrates an example of a flowchart of an operation performed by an electronic device according to an embodiment;
FIG. 4 illustrates an example of an operation of recognizing an object from an image included in a video by an electronic device according to an embodiment;
FIGS. 5A to 5B illustrate an example of an operation of an electronic device for obtaining labeling information of another image, based on labeling information of two images included in a video;
FIG. 6 illustrates an example of a flowchart of an operation performed by an electronic device according to an embodiment;
FIG. 7 illustrates an example of interpolation performed by an electronic device according to an embodiment;
FIG. 8 illustrates an example of a block diagram illustrating an autonomous driving system of a vehicle according to an embodiment;
FIGS. 9 and 10 each illustrate an example of a block diagram illustrating an autonomous driving mobile vehicle according to an embodiment;
FIG. 11 illustrates an example of a gateway related to a user device according to an embodiment;
FIG. 12 illustrates a flowchart for describing an operation of an electronic device for training a neural network based on a set of training data;
FIG. 13 illustrates an example of a block diagram of an electronic device according to an embodiment;
FIG. 14 illustrates a flowchart for describing an operation of an electronic device according to an embodiment;
FIG. 15 is a diagram for illustrating a process of obtaining labeling data related to an area selected by a user input in an image, according to an embodiment of the disclosure;
FIG. 16 is a diagram illustrating a process of generating labeling data for training for object identification in an image, according to an embodiment of the disclosure;
FIG. 17 is a diagram for describing a hierarchical structure of labeling data generated according to an embodiment of the disclosure;
FIG. 18 is a diagram for describing a hierarchical structure of information on an external object of labeling data generated according to an embodiment of the disclosure;
FIG. 19 is a diagram illustrating an example of coordinates allocated to a points parameter when a shape type is a "Polygon" according to an embodiment of the disclosure; and
FIG. 20 is a diagram for describing an example of dividing labeling data into a train set, a validation set, and/or a test set for efficient training of a neural network, according to an embodiment of the disclosure.

DETAILED DESCRIPTION

Hereinafter, various embodiments of the disclosure will be described with reference to the accompanying drawings.

It should be appreciated that various embodiments of the present disclosure and the terms used therein are not intended to limit the technological features set forth herein to particular embodiments and include various changes, equivalents, or replacements for a corresponding embodiment. In conjunction with the description of the drawings, similar reference numerals may be used to refer to similar or related elements. It is to be understood that a singular form of a noun corresponding to an item may include one or more of the items, unless the relevant context clearly indicates otherwise. As used herein, each of such phrases as "A or B", "at least one of A and/or B", "A, B, or C", "at least one of A, B, and/or C", or the like may include any one of, or all possible combinations of the items enumerated together in a corresponding one of the phrases. As used herein, expressions such terms as "1st", "2nd", "first", or "second" may be used to simply distinguish a corresponding component from another regardless of an order or importance thereof and does not limit the corresponding components in other aspect (e.g., importance or order). It is to be understood that if an element (e.g., a first element) is referred to as "operatively" or "communicatively", "coupled with" or "connected with" another element (e.g., a second element), it means that the element may be coupled with the other element either directly or via another element (e.g., a third element).

As used in connection with various embodiments of the disclosure, the term "module" may include a unit implemented in hardware, software, or firmware, and may be interchangeably used with other terms such as, e.g., "logic", "logic block", "part", or "circuit". A module may be a single integral component, or a minimum unit or part thereof adapted to perform one or more functions. For example, the module may be implemented in a form of an application-specific integrated circuit (ASIC).

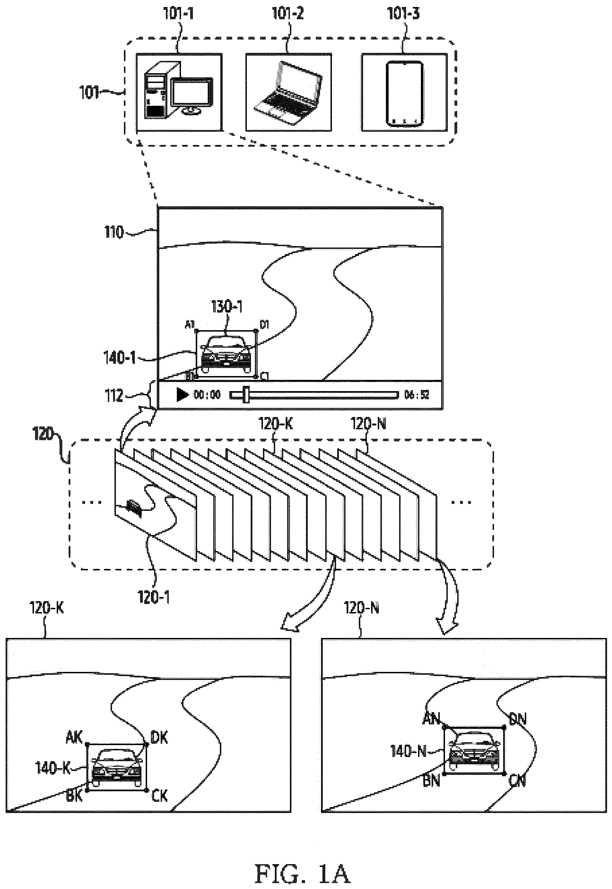

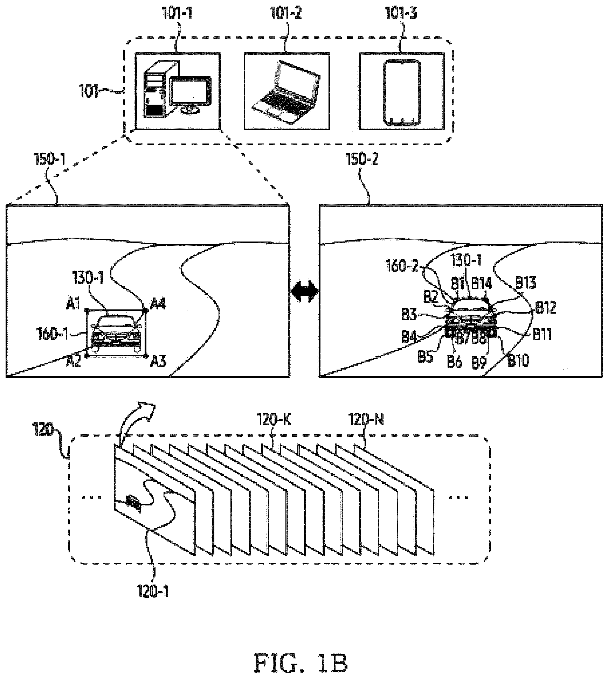

FIGS. 1A and 1B illustrate an example of an operation of obtaining labeling information by an electronic device 101 according to an embodiment. Referring to FIGS. 1A and 1B, form factors of the electronic device 101 are illustrated by way of example. In terms of being owned by a user, the electronic device 101 may be referred to as a terminal, a user device, and/or a user terminal. The electronic device 101 may include a personal computer (PC) such as a desktop 101-1 and/or a laptop 101-2. The electronic device 101 may include a smartphone 101-3, a smart pad, and/or a tablet PC. The terminal may include a smart accessory such as e.g., a smartwatch and/or a head-mounted device (HMD).

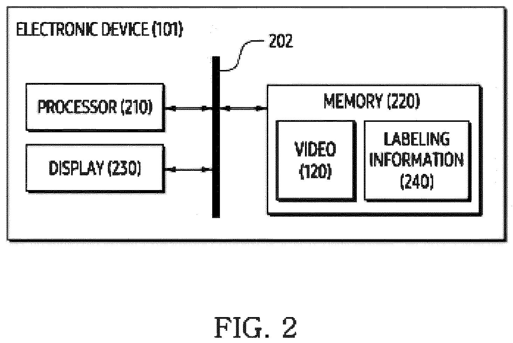

Referring to FIG. 1A, the electronic device 101 according to an embodiment may display a screen 110. The electronic device 101 may visualize information (e.g., a video 120) using the screen 110. One or more hardware components included in the electronic device 101 to display the screen 110 and/or output the information will be described with reference to FIG. 2, for example. Hereinafter, the screen 110 may refer to a user interface (UI) displayed in at least a portion of the display. The screen may include, for example, a window of Window™ operating system and/or an activity of Android™ operating system. Although an embodiment is not limited thereto, the screen 110 may be formed in an external space by light output from the electronic device 101 to the external space. For example, the screen 110 may be formed on a plane on which the light is projected in the external space. For example, the screen 110 may be three-dimensionally displayed in a form of hologram in the external space.

According to an embodiment, the electronic device 101 may display the screen 110 for playing the video 120. The video 120 may include a set of images that may be sequentially displayed according to a frame rate (or frames per second (fps)). The images included in the set may be referred to as frames, frame data, and/or frame images. The video 120 may include an audio signal to be output while the images are sequentially displayed. In terms of including both the visual information (e.g., the set of images) and auditory information (e.g., the audio signal), the video 120 may be referred to as a multimedia content (or a media content).

Referring to FIG. 1A, a plurality of images (120-1, 120-k, 120-N) identified by the electronic device 101 from the video 120 are illustrated by way of example. In a state of the video 120 is reproduced, the electronic device 101 is assumed to display, among the plurality of images shown in FIG. 1A, the image shown on the left side of FIG. 1A (e.g., the first image 120-1) before the other images (e.g., a k-th image 120-k). For example, in the above state, the k-th image 120-k may be displayed after the first image 120-1 by the electronic device 101. For example, in the state, the N-th image 120-N may be displayed after the k-th image 120-k by the electronic device 101. For example, the electronic device 101 may control to sequentially display the video 120 in the order of the first image 120-1, the k-th image 120-k, and the N-th image 120-N.

According to an embodiment, the electronic device 101 may recognize one or more external objects from the video 120. The external objects according to an embodiment are objects present in the vicinity of a system (e.g., a vehicle) onto which the electronic device 101 is mounted, and may include a pedestrian, a vehicle, a bike, a personal mobility (PM), a road sign, a lane marking, and the like. Recognizing the one or more external objects may include generating and/or obtaining, from the video 120, information on the one or more external objects captured by the video 120. The information may include data indicating a portion related to the one or more external objects, from at least one of the plurality of images for the video 120. The information may include data indicating a classification or category of the one or more external objects. In an embodiment, recognizing the one or more external objects by the electronic device 101 may include generating and/or obtaining information indicating positions related to the one or more external objects from at least one of a plurality of images included in the video 120. According to an embodiment, the electronic device 101 may obtain information including a result of recognizing the one or more external objects, based on recognizing the one or more external objects from the video 120. The information obtained by the electronic device 101 may be referred to as metadata and/or labeling information corresponding to the video 120.

According to an embodiment, the information about one or more external objects obtained by the electronic device 101 and related to the video 120 may be referred to as labeling information in terms of training a model for recognizing an external object. For example, the labeling information may be used for supervised learning of the model together with the video 120 matching the labeling information. The model may be a recognition model implemented in software or hardware that may imitate a computational capability of a biological system using a large number of artificial neurons (or nodes or perceptron). Based on the model, the electronic device 101 may perform an operation similar to a human cognitive action or a learning process. The supervised learning for the model may include changing a weight assigned to a plurality of nodes included in the model and/or a connection between the plurality of nodes, by using input data (e.g., the video 120), output data of the model for the input data, and ground truth data (e.g., labeling information corresponding to the video 120). The model trained by the video 120 and the labeling information corresponding to the video 120 may output a result of recognizing an external object from other video, while receiving the other video different from the video 120. Information on the one or more external objects may be used for purposes other than supervised learning. For example, in terms of tracking and/or monitoring an external object included in the video 120, information on one or more external objects related to the video 120 may be referred to as object tracking information.

Referring to FIG. 1A, a screen 110 displayed by the electronic device 101 is illustrated by way of example to generate labeling information corresponding to the video 120. The electronic device 101 may display a first image 120-1 at a first timing of the video 120. The electronic device 101 may display a panel 112 including one or more visual objects for controlling the video 120 together with the first image 120-1, in the screen 110. The visual object may refer to an object that may be deployed in the screen 110 for transmission and/or interaction information, such as a text, an image, an icon, a video, a button, a checkbox, a radio button, a text box, a slider, and/or a table. The visual object may be referred to as a visual element, a UI element, a view object, and/or a view element. In the state in which the first image 120-1 in the video 120 is displayed, the electronic device 101 may identify a user input for selecting an area related to an external object in the first image 120-1. An example operation of the electronic device 101 for identifying the user input will be described with reference to FIG. 1B.

In an example case of FIG. 1A, the electronic device 101 displaying the first image 120-1 including the visual object 130-1 representing the vehicle in the first image 120-1 may identify a user input for selecting and/or segmenting the visual object 130-1. For example, the electronic device 101 may identify an input indicating selection of vertexes (A1, B1, C1, D1) of an area 140-1 of the first image 120-1 including the visual object 130-1.

In an embodiment, in response to the input indicating selection of the vertices (A1, B1, C1, D1), the electronic device 101 may display a visual object in a shape of a bounding box representing the area 140-1 corresponding to the input. For example, the vertices of the bounding box may match the vertices (A1, B1, C1, D1) of the area 140-1. The electronic device 101 may connect between the vertices (A1, B1, C1, D1) with a line having a designated color to display the bounding box. The designated color of the line for displaying the bounding box may be related to a result of recognizing the visual object 130-1 included in the area 140-1. In the example case of FIG. 1A, based on identifying that the external object corresponding to the visual object 130-1 is a vehicle, the electronic device 101 may set the designated color of the bounding box to a specified color corresponding to the vehicle. The embodiment is not limited thereto, and the electronic device 101 may display a result of recognizing the external object from the area 140-1 of the first image 120-1 included in the bounding box, by displaying text (e.g., "vehicle") adjacent to the bounding box or superimposed on the bounding box.

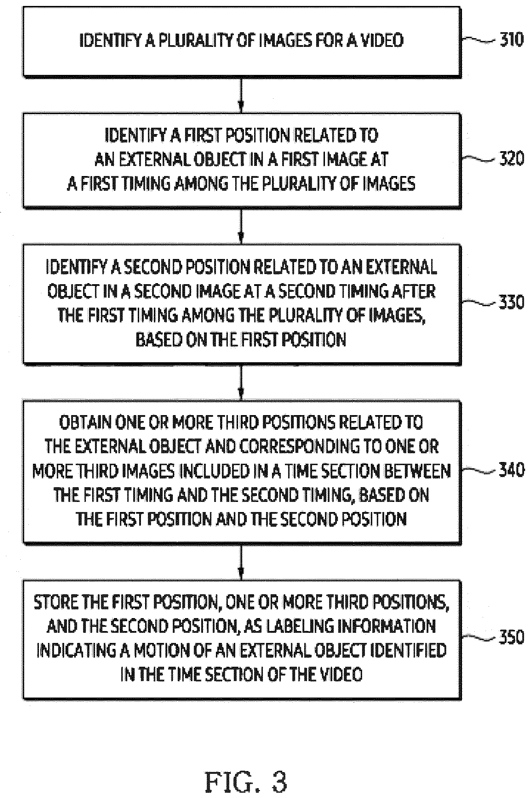

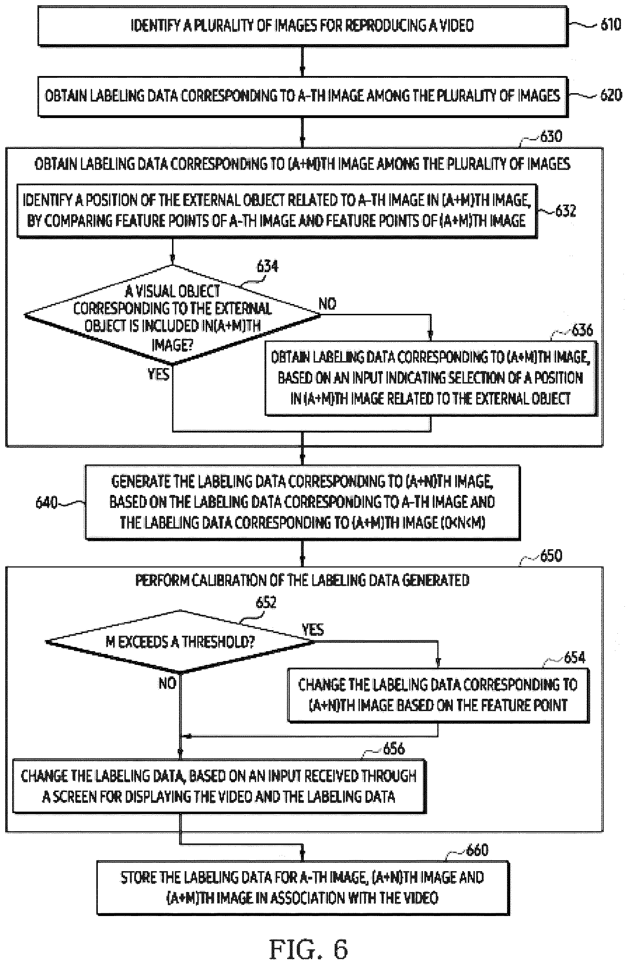

According to an embodiment, the electronic device 101 may identify one or more positions related to the external object from another image (e.g., a k-th image 120-k and/or an N-th image 120-N) different from the first image 120-1, based on identifying the position (e.g., the area 140-1) related to the external object in the first image 120-1. In an embodiment, the electronic device 101 may identify the position related to the external object from other image different from the first image 120-1, based on a user input for selecting the position (e.g., the position of the area 140-1) in the first image 120-1 related to the external object. The electronic device 101 may identify the position related to the external object from another image different from the first image 120-1, without requiring another user input distinguished from the user input corresponding to the first image 120-1. An operation of the electronic device 101 for identifying a position of an external object in another image in the video 120 based on the user input to the first image 120-1 will be described with reference to FIG. 3 and/or FIG. 6.

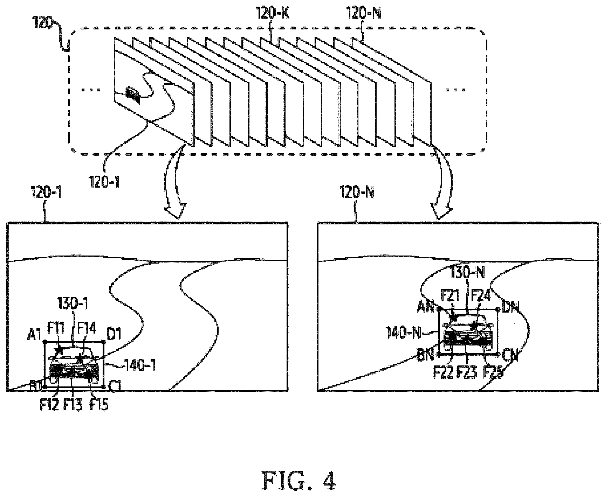

According to an embodiment, the electronic device 101 may identify a second position related to the external object (a vehicle in the example case of FIG. 1A) related to the area 140-1 in the second image at the second timing after the first timing of the first image 120-1 in the video 120, based on the area 140-1 identified by the input related to the first image 120-1. To identify the second position, the electronic device 101 may compare feature information (e.g., one or more feature points) of each of the first image 120-1 and the second image to each other. To identify the second position, the electronic device 101 may use a model trained for recognition of an object. An operation of the electronic device 101 for identifying the second position based on the feature information will be described with reference to FIG. 4.

As an example of not limiting embodiments, extracting the feature information of the entire other images different from the first image 120-1 among a plurality of images (image frames) included in the video 120 or inputting the entire other images to the model may result in an undesirable increase in the amount of computation and/or power consumption. Therefore, it may cause a heavy load onto the electronic device 101 according to an embodiment of the disclosure, which may have a negative impact on an efficient operation of a system for driving assistance to a driver of a vehicle or an autonomous driving system of a vehicle that is required to drive in a road environment, in particular, in an urban environment, where very variable and unpredictable conditions are frequently encountered. According to an embodiment, the electronic device 101 may change a computing method for recognizing an external object, while recognizing the external object from other images based on the area 140-1 of the first image 120-1 selected by the user. The electronic device 101 may change a computing method to be applied to each of the other images among different computing methods, based on timings of each of the other images in the video 120. The computing methods may include a first type of computing method for recognizing an external object based on a feature point of an image and a second type of computing method related to interpolation of positions of a specific external object identified in different images.

Referring to FIG. 1A, based on an input indicating a position (e.g., an area 140-1) in the first image 120-1 related to the external object, the electronic device 101 may identify a position (e.g., an area 140-N) related to the external object, in an N-th image 120-N which is an N-th obtained image (or an image located at the N-th timing) after a first timing of the first image 120-1. For example, the electronic device 101 may compare one or more feature points included in the area 140-1 of the first image 120-1 with the feature points of the N-th image 120-N to identify the area 140-N related to the external object in the N-th image 120-N. When the N-th image 120-N is displayed on the screen 110, the electronic device 101 may display a visual object having the form of a bounding box corresponding to the area 140-N, overlapping the N-th image 120-N. For example, the electronic device 101 may display the bounding box having the form of a line connecting the vertices (AN, BN, CN, DN) of the area 140-N.

Referring to FIG. 1A, in the state in which the area 140-N of the N-th image 120-N is identified based on the feature points in the area 140-1 of the first image 120-1, the electronic device 101 may identify the position related to the external object corresponding to the areas 140-1 and 140-N, in one or more images included in the time section of the video 120 divided by the first image 120-1 and the N-th image 120-N. Referring to FIG. 1A, the time section of the video 120 divided by the first image 120-1 and the N-th image 120-N may have a first timing of the first image 120-1 as a beginning timing and a second timing of the N-th image 120-N as an end timing. In an embodiment, the electronic device 101 may identify an area 140-k related to the k-th image 120-k (here, "k" is a natural number greater than 1 and less than N) included in the time section, based on interpolation of the area 140-1 of the first image 120-1 and the area 140-N of the N-th image 120-N.

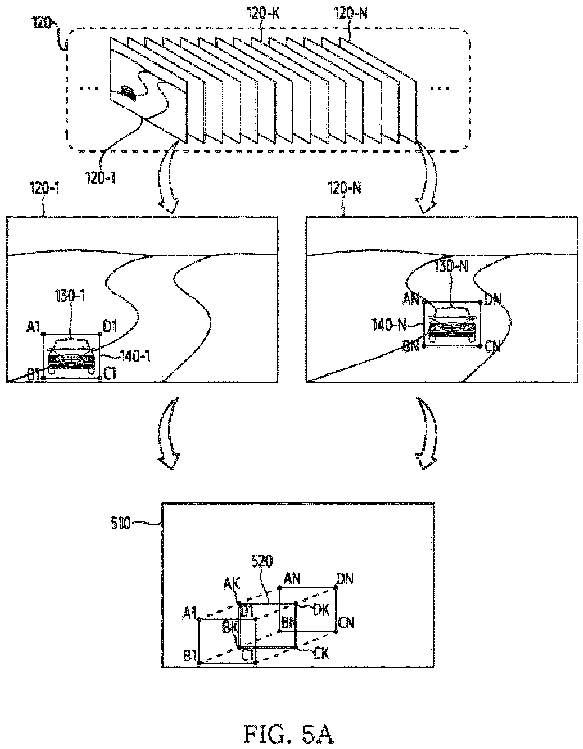

In an embodiment, in the state of identifying the area 140-k based on interpolation of the areas (140-1, 140-N), the electronic device 101 may determine coordinates of the vertices (Ak, Bk, Ck, Dk) of the area 140-k in the k-th image 120-k, based on the coordinates of the vertices (A1, B1, C1, D1) of the area 120-1 and the coordinates of the vertices (AN, BN, CN, DN) of the area 140-k. For example, the coordinates of the vertex Ak of the area 140-k may be coordinates of an internally dividing point in a line connecting the vertex A1 of the area 140-1 and the vertex AN of the area 140-N. A ratio at which the line is divided by the internally dividing point may be related to a timing of the k-th image 120-k in the time section. An example of the operation of the electronic device 101 for identifying the area 140-k of the k-th image 120-k and/or the vertices of the area 140-k based on interpolation of the vertices of the areas 140-1 and 140-N will be described with reference to FIGS. 5A to 5B.

Referring to FIG. 1A, the operation of the electronic device 101 for recognizing areas (140-1, 140-k, 140-N) related to an external object in the first image 120-1, the k-th image 120-k, and the N-th image 120-N has been described, but embodiments are not limited thereto. For example, the electronic device 101 may identify an area related to the external object for the entire images between the first image and the N-th image, including the k-th image, based on interpolation of the areas 140-1 and 140-N. Although not illustrated herein, for another image after the N-th image in the video 120, the electronic device 101 may identify an area related to the external object based on the feature point and/or the interpolation. According to an embodiment, the electronic device 101 may store a result of identifying areas related to the external object in a plurality of images included in the video 120, as labeling information corresponding to the video 120.

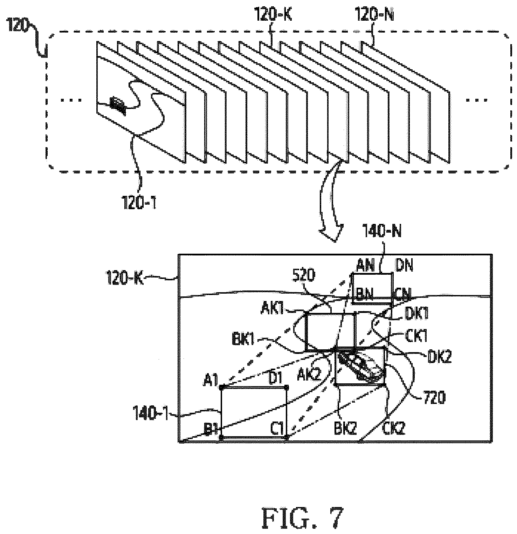

According to an embodiment, the electronic device 101 may visualize the result of identifying the area related to the external object from each of the plurality of images for the video 120, in the screen 110. As described below with reference to FIG. 7, the electronic device 101 may identify an input for adjusting (or calibrating) the result of identifying the area from the user.

Referring to FIG. 1B, an example operation of the electronic device 101 for identifying an input indicating selection of an external object in a specific image (e.g., the first image 120-1) of the video 120 will be described. Referring to FIG. 1B, the electronic device 101 according to an embodiment may display a screen (e.g., screens 150-1 and 150-2) for obtaining labeling data corresponding to the first image 120-1. The electronic device 101 may display any one of the screens (e.g., screens 150-1 and 150-2) of FIG. 1B, based on the input indicating selection of the first image 120-1 among a plurality of images included in the video 120.

Referring to FIG. 1B, the electronic device 101 may identify an input indicating selection of a rectangular area 160-1, based on the screen 150-1 corresponding to the first image 120-1 of the video 120. The input indicating selection of the area 160-1 may include a drag input from a vertex A1 of the area 160-1 to a vertex A3, as identified based on a mouse connected to the electronic device 101. Although embodiments are not limited thereto, the electronic device 101 may identify an input indicating selection of the area 160-1, based on a drag gesture performed on a touch screen. The electronic device 101 that identifies the input may obtain a class (or category) of a subject captured through the area 160-1. For example, the electronic device 101 may display a pop-up window for receiving text representing the class. Based on the text received from the user through the pop-up window, the electronic device 101 may identify the class (or category) of the subject (e.g., the visual object 130-1) captured in the area 160-1. The electronic device 101 may store information about the area 160-1 (e.g., coordinates, classes, and/or categories of the vertices (A1, A2, A3, A4)) as labeling data corresponding to the first image 120-1.

In an embodiment, the shape of the area formed in the first image 120-1 to obtain the labeling data is not limited to a quadrangle (e.g., the area 160-1 of FIG. 1B). Referring to the screen 150-2 of FIG. 1B, an input indicating selection of a polygonal area 160-2 may be identified from the first image 120-1 of the video 120. The input indicating selection of the area 160-2 may be identified by gestures of sequentially clicking and/or touching the vertices (B1, B2, B3, B4, B5, B6, B7, B8, B9, B10, B11, B12, B13, B14) of the polygon. The electronic device 101 identifying the input may display a polygonal area 160-2 formed in the first image 120-1 by connection of the vertices, as shown in the screen 150-2 of FIG. 1B. The electronic device 101 may identify an input for setting the class (or category) of the visual object 130-1 in the first image 120-1 distinguished by the area 160-2, together with an input indicating selection of the area 160-2. The electronic device 101 may store coordinates of the vertices (B1, B2, B3, B4, B5, B6, B7, B8, B9, B10, B11, B12, B13, B14) of the area 160-2 and a combination of the classes (or categories) as labeling data for the first image 120-1.

As described above, the electronic device 101 according to an embodiment may recognize the external object in another image distinguished from a specific image, based on an input indicating selection of the external object in the specific image (e.g., the first image 120-1) among a plurality of images included in the video 120. The recognition of the external object by the electronic device 101 may be performed based on a combination of a first type of computing method requiring a relatively large amount of computation based on a feature point and/or a model and a second type of computing method requiring a relatively small amount of computation based on interpolation. For example, the electronic device 101 may perform an operation of recognizing an external object in all of a plurality of images in the video 120 without recognizing the external object in another image different from the specific image. Since the electronic device 101 alternately applies computing methods requiring different computation amounts for different images in the video 120, the computation amount required to obtain the labeling information corresponding to the video 120 may be reduced. As the amount of computation required to obtain the labeling information is reduced, the electronic device 101 may obtain the labeling information corresponding to the video 120 more quickly.

Hereinafter, an example structure of the electronic device 101 for performing the operations described with reference to FIGS. 1A to 1B will be described with reference to FIG. 2.

FIG. 2 illustrates an example of a block diagram of the electronic device 101 according to an embodiment. The electronic device 101 of FIG. 2 may include the electronic device 101 of FIGS. 1A to 1B. The electronic device 101 of FIG. 2 may include at least one of a processor 210, a memory 220, or a display 230. The processor 210, the memory 220, and the display 230 may be electronically and/or operably coupled with each other by an electronic component such as a communication bus 202. Hereinafter, when the hardware is operatively coupled, it may mean that a direct connection or an indirect connection between the hardware components is established by wire or wirelessly such that among the hardware components a second hardware is controlled by a first hardware. Although the electronic device is illustrated based on different blocks, embodiments are not limited thereto, and some of the hardware components of FIG. 2 (e.g., at least a portion of the processor 210 and the memory 220) may be incorporated into a single integrated circuit such as a System on a Chip (SoC). The type and/or number of hardware components included in the electronic device 101 is not limited to that illustrated in FIG. 2. For example, the electronic device 101 may include only some of the hardware components illustrated in FIG. 2.

The processor 210 of the electronic device 101 according to an embodiment may include hardware for processing data based on one or more instructions. The hardware for processing data may include, for example, an arithmetic and logic unit (ALU), a floating point unit (FPU), a field programmable gate array (FPGA), a central processing unit (CPU), and/or an application processor (AP). The number of processors 210 may be one or more. For example, the processor 210 may have a structure of a multi-core processor such as a dual-core, a quad-core, or a hexa-core.

According to an embodiment, the memory 220 of the electronic device 101 may include a hardware component for storing data and/or instructions input and/or output to the processor 210. The memory 220 may include, for example, a volatile memory such as a random-access memory (RAM) and/or a non-volatile memory such as a read-only memory (ROM). The volatile memory may include, for example, at least one of dynamic RAM (DRAM), static RAM (SRAM), cache RAM, and pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disk, a solid state drive (SSD), and an embedded multi-media card (eMMC).

According to an embodiment, one or more instructions (or commands) indicating an arithmetic operation and/or an operation to be performed by the processor 210 on data may be stored in the memory 220 of the electronic device 101. A set of one or more instructions may include firmware, an operating system, a process, a routine, a sub-routine, and/or an application. For example, when a set of a plurality of instructions distributed in the form of an operating system, firmware, a driver, and/or an application is executed, the electronic device 101 and/or the processor 210 may perform at least one of operations of FIG. 3 and/or FIG. 6. Hereinafter, when an application is installed in the electronic device 101, it may mean that one or more instructions provided in the form of the application are stored in the memory 220 of the electronic device 101, and thus the one or more applications are stored in an executable format (e.g., a file having an extension designated by the operating system of the electronic device 101) by the processor 210 of the electronic device 101.

According to an embodiment, the display 230 of the electronic device 101 may output visualized information (e.g., the screen of FIG. 1A) to the user. For example, the display 230 may be controlled by a controller such as a graphic processing unit (GPU) to output visualized information to a user. The display 230 may include a liquid crystal display (LCD), a plasma display panel (PDP), and/or one or more light emitting diodes (LEDs). The LED may include an organic LED (OLED). The display 230 may include a flat panel display (FPD) and/or an electronic paper. Embodiments of the disclosure are not limited thereto, and the display 230 may have at least a partially curved shape or a deformable shape.

According to an embodiment, the electronic device 101 may obtain labeling information 240 from the video 120 stored in the memory 220. The video 120 of FIG. 2 may include the video 120 of FIGS. 1A to 1B. For example, the electronic device 101 may identify, from the video 120, a plurality of images (e.g., the first image 120-1, the k-th image 120-k, and/or the N-th image 120-N of FIGS. 1A to 1B) encoded or compressed in the video 120 to reproduce the video 120. The labeling information 240 obtained from the video 120 by the electronic device 101 may include positions of an external object associated with each of the plurality of images. According to an embodiment, the electronic device 101 may obtain the labeling information 240 for all of the plurality of images, based on positions of external objects associated with some images, without a user input (e.g., an input described with reference to FIG. 1B) for all of the plurality of images.

According to an embodiment, the electronic device 101 may interpolate positions corresponding to two images spaced apart from each other in a sequence of images included in the video 120 to obtain positions corresponding to other images between the two images. The positions of the external objects associated with the two images spaced apart from each other may be identified by a model included in the electronic device 101 to analyze a user and/or a feature point of the electronic device 101. When a length of a time section between the two images spaced apart from each other is relatively long (e.g., when it exceeds a specified threshold length), the electronic device 101 may perform calibration for the positions obtained by the interpolation, based on feature points of one or more images in the time section. According to an embodiment, the labeling information 240 stored in the memory 220 by the electronic device 101 may include data indicating a position associated with an external object in each of the images. The data may include at least one of coordinates, width, height, aspect ratio, or size of at least one of vertices of the areas (140-1, 140-k, 140-N) of FIG. 1A.

According to an embodiment, the labeling information 240 obtained by the electronic device 101 may indicate a motion of an external object captured in the video 120. For example, the labeling information 240 may include positions of areas connected to the external object in each of the plurality of images, in a time section in which the plurality of images included in the video 120 are sequentially reproduced. The electronic device 101 may identify a result of recognizing the external object in each of the plurality of images of the video 120, based on the labeling information 240. The result may include a position of the area associated with the external object in a specific image. The electronic device 101 may perform tuning (or training) of a model (or neural network) for recognition of an external object using the plurality of images and the labeling information 240. To improve the performance of the model, tuning of the model based on relatively many images may be required. According to an embodiment, the electronic device 101 may generate the labeling information 240 for all of the plurality of images included in the video 120, using information about an external object related to a specific image of the video 120 (e.g., information indicating an area related to the external object in the specific image). Since the electronic device 101 generates the labeling information 240 for all of the plurality of images, the electronic device 101 may more quickly obtain the number of images required for tuning the model.

Hereinafter, an example of an operation performed by the electronic device 101 of FIG. 2 will be described with reference to FIG. 3.

FIG. 3 illustrates an example of a flowchart of an operation performed by an electronic device according to an embodiment. The electronic device 101 and/or the processor 210 of FIGS. 1A, 1B, and 2 may perform an operation described with reference to FIG. 3.

Referring to FIG. 3, in operation 310, the processor of the electronic device according to an embodiment may identify a plurality of images for a video. The video of operation 310 may include the video 120 of FIGS. 1A to 2. The processor may identify the plurality of images for reproducing the video from a file having a format related to a motion picture experts group (MPEG). The file may be stored in a memory (e.g., the memory 220 of FIG. 2) or may be received based on streaming over a network (e.g., Internet) connected to the electronic device. The processor may identify the plurality of images and the order in which the plurality of images are to be reproduced, based on operation 310.

Referring to FIG. 3, in operation 320, the processor of the electronic device according to an embodiment may identify a first position related to an external object in a first image at a first timing among the plurality of images. The processor may identify a first input (e.g., an input described with reference to FIG. 1B) indicating selection of the first position, while displaying the first image on a display (e.g., the display 230 of FIG. 2). The first image of operation 320 may include the first image 120-1 of FIG. 1A. For example, the screen 110 of FIG. 1A may be displayed by the processor that identifies an input indicating selection of the area 140-1 of the first image 120-1. Based on the input indicating selection of the area 140-1 of FIG. 1A, the processor may identify the first position (e.g., the position of the area 140-1) related to the external object in the first image 140-1. In an embodiment, the first position identified by the processor based on operation 320 may include at least one coordinate related to a visual object (e.g., the visual object 130-1 of FIG. 1A) related to the external object in the first image. The at least one coordinate may be included in an area 140-1 distinguished by the vertices (A1, B1, C1, D1) in the image 120-1 of FIG. 1A.

Referring to FIG. 3, in operation 330, the processor of the electronic device according to an embodiment may identify a second position related to an external object in a second image at a second timing after the first timing among the plurality of images, based on the first position of operation 320. In the state of identifying the first input for identifying the first position in operation 320, the processor may identify the second position in the second image after the time section beginning from the first timing, by performing a first type of computation for recognizing the external object based on the first input. In the sequence of the plurality of images for reproducing the video in operation 310, one or more third images may be disposed between the first image at the first timing and the second image at the second timing.

In an embodiment, the computation of the first type performed by the processor to identify the second position of operation 330 may be related to feature points of the first image and the second image. For example, the processor may extract at least one feature point related to the first position of the first image identified by operation 320 from the first image. The processor may extract one or more feature points from the second image of operation 330. The processor may compare the at least one feature point extracted from the first image with one or more feature points extracted from the second image. Based on the comparison, the processor may identify an area (e.g., the area 140-N of FIG. 1A) of the second image similar to an area (e.g., the area 140-1 of FIG. 1A) including a first position in the first image. The second position of operation 330 may be included in the area of the second image identified by the processor.

The embodiments are not limited thereto, and the computation of the first type performed by the processor to identify the second position of operation 330 may be related to a model trained for recognition of an external object. For example, the processor may input, to the model, data on an external object related to the first position of the first image, together with the second image. Based on the data and data output from the model to which the second image is input, the processor may identify the second position related to the external object in the second image,.

Referring to FIG. 3, in operation 340, the processor of the electronic device according to an embodiment may obtain one or more third positions corresponding to one or more third images included in a time section between the first timing and the second timing and related to the external object, based on the first position and the second position. For example, the processor may obtain the one or more third positions by performing a second type of computation for interpolating the first position of operation 320 and the second position of operation 330. The one or more third positions obtained by the processor may be disposed on a line connecting the first position and the second position. The one or more third positions on the line may be related to timings of the one or more third images. The processor may obtain one or more third positions of operation 340, based on the amount of computation less than the amount of computation performed by operation 330 to extract the feature point.

Referring to FIG. 3, in operation 350, the processor of the electronic device according to an embodiment may store the first position, the one or more third positions, and the second position as labeling information indicating a motion of an external object identified in the time section of the video. The labeling information 240 of FIG. 2 may include labeling information of operation 350. According to an embodiment, the processor may store, in the labeling information, a parameter indicating an image corresponding to positions identified by operations 320 to 340 among a plurality of images. For example, the labeling information stored by the processor may include a parameter indicating that the first position corresponds to the first image (e.g., a timestamp associated with data indicating the first position). For example, the labeling information stored by the processor may include a parameter indicating mapping of the second position and the second image. For example, the labeling information stored by the processor may include a parameter indicating a relationship between the one or more third locations and the one or more third images.

As described above, the processor of the electronic device according to an embodiment may perform different types of computations for obtaining labeling information for a plurality of images included in the video. The labeling information obtained by the processor may be used for training a model based on the plurality of images. The processor of the electronic device according to an embodiment may display a screen for receiving a user's feedback on the labeling information in order to improve accuracy of the labeling information. For example, the processor may display any one of the first image, the one or more third images, and the second image on the display (e.g., the display 230 of FIG. 2). The processor may display any one of the first image, the one or more third images, and the second image on the display, in response to the second input indicating reproduction of at least a portion of the video included in the time section of operation 340. The processor may display a visual object corresponding to any one of the first position, the third positions, or the second position, which is included in the labeling information, as superimposed on the image displayed on the display. The visual object may have a shape of a bounding box. Based on the visual object, the processor of the electronic device may receive an input for at least partially adjusting the labeling information. The input for at least partially adjusting the labeling information may be received similarly to the input indicating selection of an area (e.g., the areas 160-1 and 160-2) described with reference to FIG. 1B.

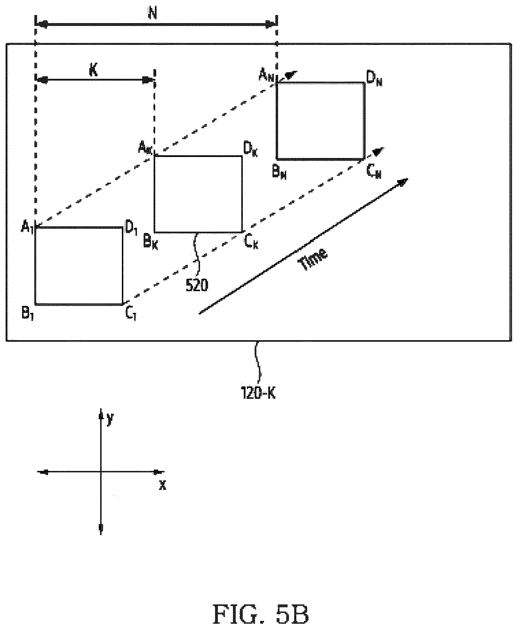

Hereinafter, an example of operations 330 and 340 of FIG. 3 performed by an electronic device according to an embodiment will be described with reference to FIGS. 4, 5A, and 5B.

FIG. 4 illustrates an example of an operation of recognizing an object from an image included in a video by an electronic device according to an embodiment. The operation of the electronic device described with reference to FIG. 4 may be performed by the electronic device 101 and/or the processor 210 of FIGS. 1A, 1B, and 2. The operation of the electronic device described with reference to FIG. 4 may be related to at least one (e.g., operation 330) of the operations of FIG. 3.

Referring to FIG. 4, the electronic device according to an embodiment may identify an external object (e.g., a vehicle) commonly related to the first image 120-1 and the N-th image 120-N, which are spaced apart from each other, in a sequence of a plurality of images included in the video 120. Based on operation 320 of FIG. 3, the electronic device may identify the first image 120-1 and the visual object 130-1 corresponding to the external object in the first image 120-1. In an embodiment, the electronic device may identify a position of the visual object 130-1 related to the external object in the first image 120-1, based on an input indicating selection of the area 140-1. The input indicating selection of the area 140-1 may include an input in FIG. 1B. The position of the visual object 130-1 may correspond to the first position of FIG. 3.

Referring to FIG. 4, according to an embodiment, the electronic device may identify feature points (e.g., F11, F12, F13, F14, F15) included in the area 140-1, based on identifying the area 140-1 of the first image 120-1. The electronic device may identify the feature points (e.g., F11, F12, F13, F14, F15) based on a change in color and/or brightness between pixels included in the first image 120-1. For example, the feature points extracted from the area 140-1 may represent pixels whose color and/or brightness are changed relatively rapidly. For example, the feature points may include edges, corners, and/or skeletons represented by the pixels included in the area 140-1.

Further, the electronic device according to an embodiment may track a motion trajectory of the external object included in the area 140-1 using a pixel trajectory estimation method that estimates the trajectories of pixels present in the image frames making up the video 120, thereby determining whether or not the external object present in the area 140-1 of the first image 120-1 exists in the image located (acquired) after the first image 120-1 (e.g., after a lapse of t time), and predicting the position of the existing external object.

According to an embodiment, the electronic device may extract feature points from the N-th image 120-N at the second timing after the first timing of the first image 120-1 in the sequence of the images of the video 120. The electronic device may compare the feature points (F 11, F12, F13, F14, F15) extracted from the area 140-1 of the first image 120-1 with the feature points extracted from the N-th image 120-N, thereby identifying the area 140-N having a color and/or brightness similar to that of the area 140-1 in the N-th image 120-N. For example, the electronic device may identify the feature points (F21, F22, F23, F24, F25, F26) similar to the feature points (F11, F12, F13, F14, F15) in the area 140-1, from the N-th image 120-N. Based on identifying the feature points (F21, F22, F23, F24, F25, F26) from the N-th image 120-N, the electronic device may determine the area 140-N including the feature points (F21, F22, F23, F24, F25, F26) and/or the visual object 130-N included in the area 140-N as the visual object related to the external object identified through the area 140-1 of the first image 120-1.

Although an embodiment has been described in which the electronic device compares the feature points (F11, F12, F13, F14, F15) included in the area 140-1 of the first image 120-1 including the first position corresponding to the external object with one or more feature points included in the N-th image 120-N, thereby identifying the second position related to the external object in the N-th image 120-N, the embodiment is not limited thereto. According to an embodiment, the electronic device may identify the first position and the second position by inputting the first image 120-1 and the N-th image 120-N to a model for recognizing an external obj ect.

As described above, the electronic device according to an embodiment may extract images (e.g., the N-th image 120-N) corresponding to one or more timings spaced apart along a designated time section, from the first timing of the first image 120-1 corresponding to the area 140-1 identified by a user input (e.g., the input described with reference to FIG. 1B), in the plurality of images of the video 120. The electronic device may compare the feature points of the extracted images with the feature points (F 11, F12, F13, F14, F15) in the area 140-1 of the first image 120-1, and may identify positions related to an external object (e.g., the external object related to the area 140-1) in each of the extracted images. The positions identified by the electronic device may be stored as labeling information corresponding to the video 120. According to an embodiment, the electronic device may repeatedly perform the computation of the first type for recognizing the external object based on the feature points, at each time section from the first timing of the first image 120-1. By repeatedly performing the computation of the first type, the electronic device may reduce a user input (e.g., the input described with reference to FIG. 1B) required to obtain the labeling information. The electronic device may obtain the labeling information for all of the plurality of images included in the video 120, based on linear interpolation for the positions identified by the computation of the first type. Hereinafter, an example of an operation of the electronic device for obtaining the labeling information based on the linear interpolation will be described with reference to FIGS. 5A to 5B.

FIGS. 5A and 5B illustrate an example of an operation of an electronic device for obtaining labeling information of another image, based on labeling information of two images included in a video. The operation of the electronic device described with reference to FIGS. 5A and 5B may be performed by the electronic device 101 and/or the processor 210 of FIGS. 1A, 1B and 2. The operation of the electronic device described with reference to FIGS. 5A and 5B may be related to at least one (e.g., operation 340) of the operations of FIG. 3.

Referring to FIG. 5A, illustrated are the areas 140-1 and 140-N identified by the electronic device performing the operation described with reference to FIG. 4 and respectively corresponding to the first image 120-1 and the N-th image 120-N. According to an embodiment, the areas 140-1 and 140-N corresponding to the external object related to all of the first image 120-1 and the N-th image 120-N may be identified by comparing one or more feature points included in the first image 120-1 with one or more feature points included in the N-th image 120-N.

Referring to FIG. 5A, for convenience of description, the positions of the areas 140-1 and 140-N identified in each of the first image 120-1 and the N-th image 120-N are displayed as superimposed in the coordinate plane 510. The vertices of the coordinate plane 510 may match the vertices of the first image 120-1 and the N-th image 120-N, respectively. According to an embodiment, the electronic device may obtain labeling information for an image (e.g., the k-th image 120-k) between the first image 120-1 and the N-th image 120-N, based on positions of the areas 140-1 and 140-N. For example, the labeling information obtained by the electronic device may include a position that corresponds to the k-th image 120-k between the first image 120-1 and the N-th image 120-N and is related to an external object.

Referring to FIG. 5A, illustrated is an area 520 in the k-th image 120-k obtained based on interpolation of positions of the areas 140-1 and 140-N. According to an embodiment, the electronic device may obtain coordinates of the vertices (AK, BK, CK, DK) of the area 520, based on Equation 1.

<Equation 1>

$$x_{AK \sim DK} = x_{A1 \sim D1} + \frac{K}{N}(x_{AN \sim DN} - x_{A1 \sim D1})$$
$$y_{AK \sim DK} = y_{A1 \sim D1} + \frac{K}{N}(y_{AN \sim DN} - y_{A1 \sim D1})$$

Referring to Equation 1, x coordinates $x_{AK}$ of the vertex AK of the area 520 may have a value obtained by dividing, by N:k, x coordinates ($x_{A1}$, $x_{AN}$) of the vertices (A1, AN) of the area 140-1 of the first image 120-1 and the area 140-N of the N-th image 120-N. Similarly, y coordinates $y_{AK}$ of the vertex AK of the area 520 may have a value obtained by dividing, by N:k, y coordinates $y_{A1}$ and $y_{AN}$ of the vertices A1 and AN of the area 140-1 of the first image 120-1 and the area 140-N of the N-th image 120-N. For example, each of the vertices (AK, BK, CK, DK) of the area 520 may correspond to an internally dividing point dividing, by N:k, each of the vertices (A1, B1, C1, D1) of the area 140-1 and the vertices (AN, BN, CN, DN) of the area 140-N. Referring to FIG. 5A, each of the vertices (AK, BK, CK, DK) of the area 520 may be disposed on lines respectively connecting the vertices (AN, BN, CN, DN) of the area 140-N, at each of the vertices (A1, B1, C1, D1) of the area 140-1. A symbol 'N' of Equation 1 may indicate a length of the time section between the first image 120-1 and the N-th image 120-N, and a symbol 'k' of Equation 1 may indicate the position at the timing corresponding to the k-th image 120-k in the time section.

Referring to FIG. 5B, an operation of the electronic device 101 for identifying the area 520 from the k-th image 120-k will be described by way of example. The electronic device 101 may obtain coordinates of the vertices (AK, BK, CK, DK) of the area 520 of the k-th image 120-k between the first image 120-1 and the N-th image 120-N, based on Equation 1. The x-coordinate of the vertex AK of the area 520 of FIG. 5B may have a value obtained by dividing, by N:k, the x-coordinate of the vertex A1 of the area identified in the first image 120-1 and the x-coordinate of the vertex AN of the N-th image 120-N. Similarly, the y coordinate of the vertex AK of the area 520 may have a value obtained by dividing the y coordinate of the vertex A1 of the area identified in the first image 120-1 and the y coordinate of the vertex AN of the N-th image 120-N by N:k. The x coordinates of the other vertices (BK, CK, DK) of the area 520 may also have a value obtained by dividing the x coordinates of the vertices (B1, C1, D1) of the area identified in the first image 120-1 and the x coordinates of the vertices (BN, CN, DN) of the area identified in the N-th image 120-N by N:k. Similarly, the y coordinates of the other vertices (BK, CK, DK) of the area 520 may also have a value obtained by dividing the y coordinates of the vertices (B1, C1, D1) of the area identified in the first image 120-1 and the y coordinates of the vertices (BN, CN, DN) of the area identified in the N-th image 120-N by N:k.

According to an embodiment, the electronic device may store data indicating positions and/or sizes of the areas (140-1, 520, 140-N) as labeling information corresponding to the video 120. For example, the electronic device may store data on the vertices (A1, B1, C1, D1) as information indicating the area 140-1 corresponding to the first image 120-1, in the labeling information. The electronic device may store, in the labeling information, data indicating the coordinates of the vertices (AK, BK, CK, DK) as information indicating the area 140-k corresponding to the k-th image 120-k. The electronic device may store, in the labeling information, parameters related to at least one of the vertices (AN, BN, CN, DN) as information indicating the area 140-N corresponding to the N-th image 120-N. The electronic device may further store a parameter indicating that the parameters correspond to the N-th image 120-N, together with parameters related to at least one of the vertices (AN, BN, CN, DN) of the area 140-N, in the labeling information.

As described above, the electronic device according to an embodiment may obtain the third coordinate indicating the third position of the area 520 in the k-th image 120-k between the first image 120-1 and the N-th image 120-N, by interpolating the first coordinate indicating the first position of the area 140-1 in the first image 120-1 at the first timing and the second coordinate indicating the second position of the area 140-N in the N-th image 120-N at the second timing, using a length (e.g., N in Equation 1) between the first timing and the second timing. The electronic device may obtain the third position, by interpolating the first coordinate and the second coordinate based on the timing (e.g., k in Equation 1) of the k-th image 120-k. For example, the electronic device may perform a second type of computation (e.g., the interpolation described with reference to Equation 1) for obtaining the third position, based on the first position, the second position, and the timing of the k-th image.

Hereinafter, an example operation of the electronic device described with reference to the above-described drawings will be described with reference to FIG. 6.

FIG. 6 illustrates an example of a flowchart of an operation performed by an electronic device according to an embodiment. The operation of the electronic device described with reference to FIG. 6 may be performed by the electronic device 101 and/or the processor 210 of FIGS. 1A and 1B. The operation of the electronic device described with reference to FIG. 6 may be related to the operations of the electronic device described with reference to FIG. 3.

Referring to FIG. 6, in operation 610, the processor of the electronic device according to an embodiment may identify a plurality of images for reproducing a video. The processor may perform operation 610 of FIG. 6 similarly to operation 310 of FIG. 3. The video of operation 610 may include the video 120 of FIGS. 1A to 5A.

Referring to FIG. 6, in operation 620, the processor of the electronic device according to an embodiment may obtain labeling data corresponding to an a-th image among the plurality of images. The a-th image of operation 620 may include the first image 120-1 of FIGS. 1A to 5B. The labeling data of operation 620 may indicate an area (e.g., the area 140-1 of FIGS. 1A to 5A) related to an external object in the a-th image. The processor may obtain the labeling data based on identifying an input indicating selection of the area in the a-th image through the screen 110 of FIG. 1A. The input may include an input described with reference to FIG. 1B. The processor may obtain the labeling data based on an input to a position of the area (e.g., coordinates of the vertices (A1, B1, C1, D1) of the area 140-1 of FIGS. 1A to 5A).

Referring to FIG. 6, in operation 630, the processor of the electronic device according to an embodiment may obtain labeling data corresponding to an (a+M)th image among the plurality of images. The (a+M)th image of operation 630 may include the N-th image 120-N of FIGS. 1A to 5B. The labeling data of operation 630 obtained by the processor may represent an the area (e.g., the area 140-N of FIGS. 1A to 5A) related to the external object in the (a+M)th image. According to an embodiment, the processor may perform operation 630 of FIG. 6, based on the operation described with reference to FIG. 4.

For example, in operation 632 of FIG. 6, the processor of the electronic device according to an embodiment may identify the position of the external object related to the a-th image in the (a+M)th image, by comparing the feature points of the a-th image and the feature points of the (a+M)th image. Based on the similarity between the a-th image and the (a+M)th image represented by at least one feature point, the processor may identify positions of the external object included in all of the a-th image and the (a+M)th image, in each of the a-th image and the (a+M)th image. In an embodiment, when the position in the (a+M)th image related to the external object is not automatically identified based on the feature point, the processor may request the user of the electronic device to input the position.

For example, in operation 634 of FIG. 6, the processor of the electronic device according to an embodiment may identify whether the visual object corresponding to the external object is included in the (a+M)th image. For example, the processor may identify whether the visual object corresponding to the external object is included in the (a+M)th image, by comparing the one or more feature points identified from the position in the a-th image related to the external object and the one or more feature points included in the (a+M)th image, as indicated by the labeling data of operation 620. In an embodiment using a model for recognizing an external object, the processor may identify whether the visual object corresponding to the external object is included in the (a+M)th image, based on a probability that the (a+M)th image includes the external object, as identified by the model. When the visual object is included in the (a+M)th image (operation 634 - Yes), the processor may perform operation 640. When the visual object is not included in the (a+M)th image (operation 634 - NO), the processor may perform operation 636.

For example, in operation 636 of FIG. 6, the processor of the electronic device according to an embodiment may obtain labeling data corresponding to the (a+M)th image, based on an input indicating selection of a position in the (a+M)th image related to the external object. In operation 636, the processor may display, on the display, a screen for obtaining the position related to the external object in the (a+M)th image. Based on the input received through the screen, the processor may obtain the labeling data of operation 636.

Referring to FIG. 6, in operation 640, the processor of the electronic device according to an embodiment may generate the labeling data corresponding to the (a+N)th image, based on the labeling data corresponding to the a-th image and the labeling data corresponding to the (a+M)th image. The numeral 'N' may be a natural number greater than 0 and less than M ($0 < N < M$). The (a+N)th image of operation 640 may include the k-th image of FIGS. 1A to 5B. The processor may generate the labeling data corresponding to the (a+N)th image, by performing an interpolating the position in the a-th image indicated by the labeling data of operation 620 and the position in the (a+M)th image indicated by the labeling data of operation 630. The processor may perform operation 640 of FIG. 6 based on the operation described with reference to FIG. 5A and/or FIG. 5B. The processor may generate the labeling data corresponding to the (a+N)th image, by performing the interpolation described with reference to Equation 1.

According to an embodiment, the processor of the electronic device may obtain the labeling data for all of the (a+M)th images from the a-th image, by performing operations 610 to 640 of FIG. 6. Referring to FIG. 6, in operation 650, the processor of the electronic device according to an embodiment may perform a calibration of the labeling data generated by operations 610 to 640. The calibration performed by the processor may be performed to combine a non-linear motion of an external object captured by the video with the labeling data linearly adjusted by a linear interpolation.

For example, in operation 652 of FIG. 6, the processor of the electronic device according to an embodiment may identify whether a parameter (e.g., a natural number M) indicating an interval between the a-th image and the (a+M)th image exceeds a threshold. The interval may be related to a length of a time section between the timing of the a-th image and the timing of the (a+M)th image. When the interval exceeds the threshold value (YES - operation 652), the processor may perform operation 654. For example, when the interval is greater than the threshold interval, the processor may perform operation 654. When the interval is equal to or less than the threshold value (NO - operation 652), the processor may perform operation 656.

For example, in operation 654 of FIG. 6, the processor of the electronic device according to an embodiment may change the labeling data corresponding to the (a+N)th image based on the feature point. For example, the processor may compare one or more feature points extracted from the a-th image with the feature points included in the (a+N)th image, based on the labeling data corresponding to the a-th image (e.g., the labeling data obtained from the user of the electronic device), thereby changing the labeling data corresponding to the (a+N)th image. The one or more feature points extracted from the a-th image may be extracted from the area related to the external object in the a-th image indicated by the labeling data. The feature points in the (a+N)th image compared with the one or more feature points extracted from the a-th image may be extracted from the entire (a+N)th image.

For example, the processor may identify an area in the (a+N)th image similar to the area of the a-th image indicated by the labeling data corresponding to the a-th image, based on the comparison. The processor may change the labeling data corresponding to the (a+N)th image, based on the position of the area in the (a+N)th image identified based on the comparison. The processor may change the labeling data generated by operation 640 related to the interpolation, based on operation 654 related to the comparison of feature points of different images.

For example, in operation 656 of FIG. 6, the processor of the electronic device according to an embodiment may change the labeling data, based on an input received through a screen for displaying the video and the labeling data. The screen of operation 656 may include the screen 110 of FIG. 1A. The processor of the electronic device may identify an input for changing the labeling data corresponding to any one of the a-th image to the (a+M)th image, through the screen. Based on the input, the processor may change the position in the image related to the external object, by adjusting the labeling data corresponding to the input.

Referring to FIG. 6, in operation 660, the processor of the electronic device according to an embodiment may store the labeling data for the a-th image, the (a+N)th image, and the (a+M)th image in association with the video. The labeling data stored in association with the video by operation 660 may correspond to the labeling information 240 of FIG. 2. The labeling data stored in operation 660, together with the video in association with the labeling data, may be used for training a model (or neural network) for recognizing a video and/or an image.

In an embodiment, the labeling data identified based on operation 660 may include information as shown in Table 1.

**Table 1**

| Parameter name | Description | Example |
|---|---|---|
| Tool version | Tool version | 1.0.0 |
| Image path | Image path of corresponding to labeling data | example.jpg |
| Image width | Image width | 1280 |
| Image height | Image height | 650 |
| Image flags | Image flags (for example, it is possible to set flag type according to user's purpose with weather information, etc. identified from image) | Sunny day = true, Rainy day = false, Cloudy day = false |
| Shapes | Information about external object | |

The information (shapes) on the external object in Table 1 may include information on the external object included in the image as a sub-object. The information on the external object in Table 1 may include information as shown in Table 2 below.

**Table 2**

| Parameter name | Description | Example |
|---|---|---|
| Label | External object class | pedestrian, car |
| Tracking ID | Identifier of external object (see FIG. 14) | 0, 1, 2 (integer no less than zero) |
| Shape type | Method for representing position of external object in image | rectangle, polygon |
| Points | Coordinates indicating position | Combination of (x, y) coordinates (in case of rectangle, 4 coordinates) |
| Label flags | Flag related to external object | Whether interpolated, whether covered by other external object, or whether cut off from boundary of image |

In an embodiment, a K-fold cross validation may be performed for training a neural network. The processor that obtained the labeling data corresponding to the large amount of images based on FIG. 6 may perform an algorithm for verifying reliability of the neural network, such as the K-fold cross validation. For example, the processor may classify the labeling data into a train set, a validation set, and/or a test set. For example, the processor may classify the labeling data based on the image flags of Table 1. For example, based on weather-based image flags, the processor may classify the labeling data according to the weather. Classifying the labeling data based on the images flags may be used to uniformize characteristics of images utilized for training and/or verification of the neural network. For example, using the labeling data classified based on weather-based image flags, the processor may sample the labeling data from groups of labeling data corresponding to different weathers, so that the labeling data classified as specific weather is not used for training and/or verification of the neural network. When the labeling data is generated for images exceeding a specified number, the processor may classify the labeling data into three sets: a train set, a validation set, and a test set. When the labeling data is generated for the specified number of images or less, the processor may divide the labeling data into two sets of a train set and a test set.

In an embodiment, the processor may divide the labeling data included in the train set into K folds. Within the divided folds, the processor may re-divide the labeling data into K folds, and then designate K-1 pieces of labeling data as the labeling data for training and the remaining one piece of labeling data as the labeling data for verification. The processor may generate a neural network (or model) and extract an error value by inputting the labeling data for the training. The processor may extract an error value, while crossing the labeling data for verification for each fold. The processor that has extracted the error values for all folds may perform optimization of the neural network, based on the extracted error values. The processor may perform training on the entire train set based on the optimized neural network. After performing the training on the entire train set, the processor may perform evaluation of the neural network based on the labeling data included in the test set.

As described above, the processor of the electronic device according to an embodiment may obtain the labeling data for all of the plurality of images included in the video, by alternately performing a first type of computation based on comparison of the feature points and a second type of computation based on interpolation between positions (or coordinates) indicated by the labeling data. As the processor performs the computations in an alternating manner, the processor may acquire the labeling data more quickly, without extracting the feature points from the entirety of the plurality of images.

Hereinafter, an example of an operation of an electronic device that identifies a user input for changing labeling data will be described with reference to FIG. 7.

FIG. 7 illustrates an example of interpolation performed by an electronic device according to an embodiment. The operation of the electronic device described with reference to FIG. 7 may be performed by the electronic device 101 and/or the processor 210 of FIGS. 1A, 1B, and 2. The operation of the electronic device described with reference to FIG. 7 may be related to at least one (e.g., at least one of the operations 654 and 656 of FIG. 6) of the operations of FIG. 3 and/or FIG. 6.

Referring to FIG. 7, the areas (140-1, 520, 140-N) respectively corresponding to a first image 120-1, a k-th image 120-k, and an N-th image 120-N included in a sequence of a plurality of images for reproducing the video 120 are illustrated. The area 140-1 corresponding to the first image 120-1 may be identified by a user input (e.g., the input described with reference to FIG. 1B) for selecting a position related to an external object in the first image 120-1. The area 140-N corresponding to the N-th image 120-N may be identified based on comparison between one or more feature points included in the area 140-1 of the first image 120-1 and feature points included in the N-th image 120-N. The area 520 corresponding to the k-th image 120-k may be obtained based on the interpolation described with reference to FIGS. 5A to 5B. For example, the electronic device may identify the position of the area 520 of the k-th image 120-k based on the interpolation of the areas 140-1 and 140-N.

In an example case of FIG. 7, the position of the area 520 linearly obtained by the interpolation, based on a non-linear motion of the external object represented by the video 120, may be spaced apart from the position related to the external object in the k-th image 120-k. According to an embodiment, based on operation 654 of FIG. 6, the processor of the electronic device may compare feature points included in the k-th image 120-k with feature points (e.g., feature points in the area 140-1 of the first image 120-1) of another image (e.g., the first image 120-1) to change the area 520 identified by the interpolation. Referring to FIG. 7, the processor may change the area related to the external object in the k-th image 120-k from the area 520 to the area 720, based on the comparison of the feature points. The processor may change and/or move the area 520 obtained by interpolation to the area 720, based on operation 654 of FIG. 6.

In the example case of FIG. 7, the processor may identify an input indicating a change of the area 520 for the k-th image 120-k. For example, in the state in which the k-th image 120-k is displayed through the display (e.g., the display 230 of FIG. 2), the processor may display a visual object (e.g., a bounding box) indicating the position of the external object, as superimposed on the k-th image 120-k based on the labeling information corresponding to the k-th image 120-k. The position of the visual object on the k-th image 120-k may correspond to the area 520. In the above example, the processor may identify an input indicating movement of the visual object. Based on the input, the processor may adjust the labeling data corresponding to the k-th image 120-k, based on the position of the visual object moved by the input. For example, based on the input of moving the area 520 to the area 720, the processor may change the position related to the external object in the k-th image 120-k, in the labeling data, to the position of the area 720.

The processor of the electronic device according to an embodiment may change the labeling data for other images adjacent to the k-th image 120-k in the sequence of a plurality of images for reproduction of the video 120, using the changed position, based on changing the position related to the external object in the k-th image 120-k. For example, in the state in which the position related to the external object in the k-th image 120-k is changed from the position related to the area 520 to the position related to the area 720, the processor may change the position related to the external object in at least one image different from the k-th image 120-k. For example, the processor may change the labeling data corresponding to other image (e.g., the (k-1)th image 120-k-1) between the first image 120-1 and the k-th image 120-k, and/or other image (e.g., the (k+1)th image 120-k+1) between the k-th image 120-k and the N-th image 120-N.

Referring to FIG. 7, in the state in which the area 520 of the k-th image 120-k, represented by the labeling data obtained based on the interpolation, is changed to the area 720, the processor may identify a position and/or an area related to an external object in other image between the first image 120-1 and the k-th image 120-k, on lines connecting the vertices (AK2, BK2, CK2, DK2) of the area 720 and the vertices (A1, B1, C1, D1) of the first image 120-1. For example, the processor may obtain the labeling data for images between the first image 120-1 and the k-th image 120-k, based on interpolation between the area 140-1 of the first image 120-1 and the area 720 of the k-th image 120-k. Similarly, in the above state, the processor may identify a position and/or a region related to an external object in other image between the k-th image 120-k and the N-th image 120-N, on lines connecting the vertices (AK2, BK2, CK2, DK2) of the area 720 and the vertices (AN, BN, CN, DN) of the N-th image 120-N.

As described above, the electronic device 101 may additionally adjust the labeling data of other images (e.g., images between the first image 120-1 and the k-th image 120-k and/or other images between the k-th image 120-k and the N-th image 120-N) adjacent to the k-th image 120-k, based on an input for changing the area 520 of the k-th image 120-k, as indicated by the labeling data obtained based on the interpolation, to the area 720. Based on the adjustment, the electronic device 101 may improve an accuracy of labeling information for a plurality of images included in the video 120, using the input.

As described above, the electronic device according to an embodiment may selectively apply feature point matching and/or linear interpolation to the plurality of images, in order to obtain the labeling information more quickly for the plurality of images included in the video 120. The electronic device may maintain and/or improve the accuracy of the labeling information based on the feature point matching, while reducing the amount of computation and/or time for generating the labeling information based on the interpolation.

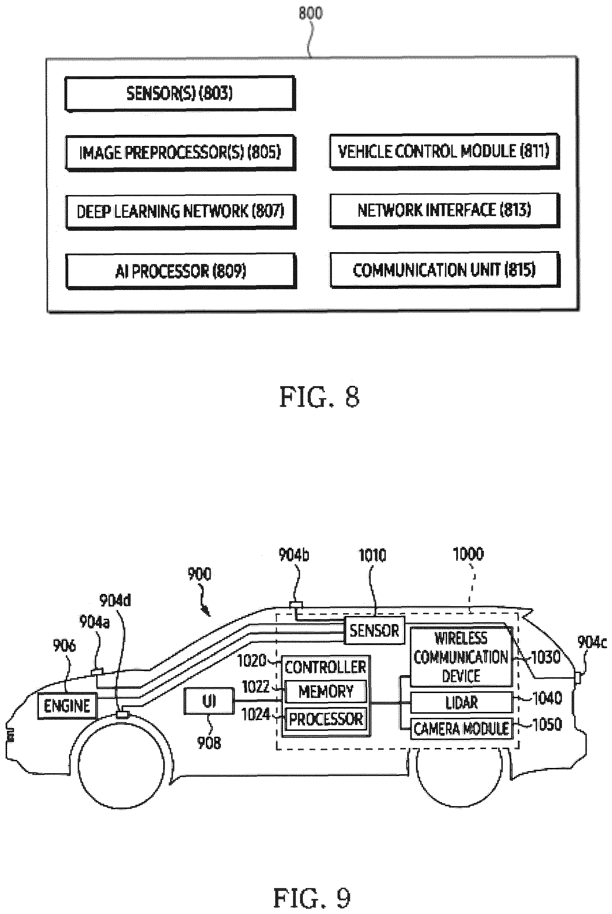

FIG. 8 illustrates an example of a block diagram illustrating an autonomous driving system of a vehicle according to an embodiment.

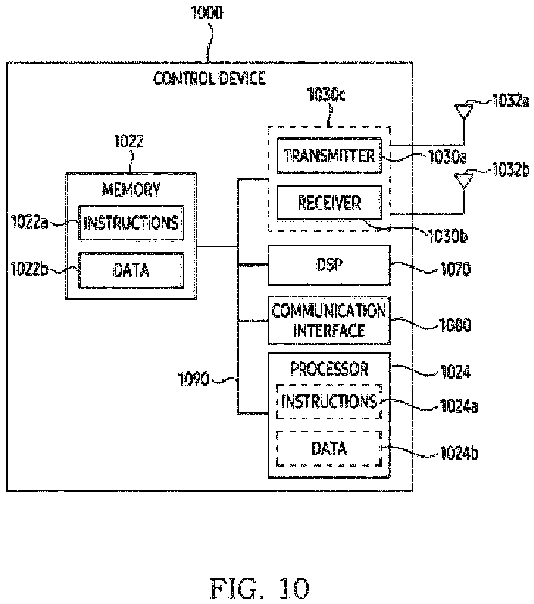

FIGS. 9 and 10 each illustrate an example of block diagram illustrating an autonomous mobile vehicle according to an embodiment.

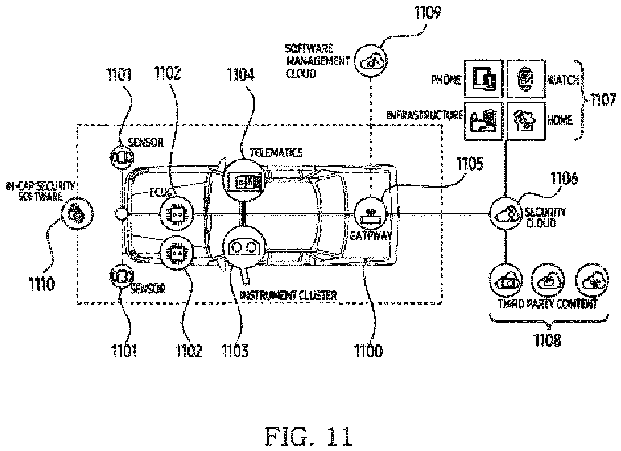

FIG. 11 illustrates an example of a gateway related to a user device according to an embodiment.

An autonomous driving system 800 of a vehicle according to FIG. 8 may include a plurality of sensors 803, an image preprocessor 805, a deep learning network 807, an artificial intelligence (AI) processor 809, a vehicle control module 811, a network interface 813, and a communication unit 815. In various embodiments, each element may be connected to each other via various interfaces. For example, sensor data detected and output by the sensors 803 may be fed to the image preprocessor 805. The sensor data processed by the image preprocessor 805 may be fed to the deep learning network 807 run by the AI processor 809. The output of the deep learning network 807 run by the AI processor 809 may be fed to the vehicle control module 811. Intermediate results of the deep learning network 807 run by the AI processor 809 may be fed to the AI processor 809. In various embodiments, the network interface 813 communicates with an electronic device in a vehicle to transmit autonomous driving route information and/or autonomous driving control commands for autonomous driving of the vehicle to internal block components. In an embodiment, the network interface 813 may be used to transmit sensor data obtained through the sensor(s) 803 to an external server. In some embodiments, the autonomous driving control system 800 may include additional or fewer components as appropriate. For example, in some embodiments, the image preprocessor 805 may be an optional component. As another example, a post-processing element (not shown) may be included in the autonomous driving control system 800 to perform post-processing on the output of the deep learning network 807 before the output is transferred to the vehicle control module 811.

In some embodiments, the sensor(s) 803 may include one or more sensors. In various embodiments, the sensors 803 may be attached to different positions of the vehicle. The sensors 803 may face one or more different directions. For example, the sensors 803 may be attached to the front, sides, rear, and/or roof of the vehicle to face in directions such as forward-facing, rear-facing, side-facing, etc. In some embodiments, the sensors 803 may include image sensors such as high dynamic range cameras. In some embodiments, the sensors 803 may include non-visual sensors. In some embodiments, the sensors 803 may include radar, light detection and ranging (LiDAR), and/or ultrasonic sensors in addition to the image sensor. In some embodiments, some of the sensors 803 may be not mounted on the vehicle having the vehicle control module 811. For example, the sensors 803 may be incorporated as a part of a deep learning system for capturing sensor data and may be installed onto a surrounding environment or roadways and/or mounted on any neighboring vehicles.

In some embodiments, the image preprocessor 805 may be used to pre-process sensor data from the sensors 803. For example, the image preprocessor 805 may be used to pre-process sensor data, to split sensor data into one or more elements, and/or to post-process the one or more elements. In some embodiments, the image preprocessor 805 may include a graphics processing unit (GPU), a central processing unit (CPU), an image signal processor, or a specialized image processor. In various embodiments, the image preprocessor 805 may include a tone-mapper processor for processing high dynamic range data. In some embodiments, the image preprocessor 805 may be a component of the AI processor 809.

In some embodiments, the deep learning network 807 may be a deep learning network for implementing control commands for controlling an autonomous vehicle. For example, the deep learning network 807 may be an artificial neural network such as a convolution neural network (CNN) trained using sensor data, and an output of the deep learning network 807 may be provided to the vehicle control module 811.

In some embodiments, the AI processor 809 may be a hardware processor for running the deep learning network 807. In some embodiments, the AI processor 809 may be a specialized AI processor for performing inference on sensor data through a CNN. In some embodiments, the AI processor 809 may be optimized for a bit depth of sensor data. In some embodiments, the AI processor 809 may be optimized for deep learning operations such as computational operations of a neural network including convolution, inner product, vector, and/or matrix operations. In some embodiments, the AI processor 809 may be implemented with a plurality of graphics processing units (GPUs) capable of effectively performing parallel processing.

In various embodiments, the AI processor 809 may be coupled, via an input/output interface, to memory configured to perform a deep learning analysis on the sensor data received from the sensor(s) 803 while the AI processor 809 is in execution, and to provide an AI processor having instructions causing the AI processor to determine a machine learning result used to operate a vehicle at least partially autonomously. In some embodiments, the vehicle control module 811 may be used to process commands for a vehicle control output from the AI processor 809 and to translate the output of the AI processor 809 into instructions for controlling modules of each vehicle in order to control various modules of the vehicle. In some embodiments, the vehicle control module 811 may be used to control the vehicle for autonomous driving. In some embodiments, the vehicle control module 811 may adjust steering and/or speed of the vehicle. For example, the vehicle control module 811 may be used to control driving of a vehicle such as e.g., deceleration, acceleration, steering, lane change, lane maintenance, and so on. In some embodiments, the vehicle control module 811 may generate control signals for controlling vehicle lighting, such as brake lights, turn signals, and headlights. In some embodiments, the vehicle control module 811 may be used to control vehicle audio-related systems such as a vehicle's sound system, vehicle's audio warnings, a vehicle's microphone system, a vehicle's horn system, or the like.

In some embodiments, the vehicle control module 811 may be used to control notification systems including warning systems for notifying passengers and/or drivers of any driving events such as e.g., approaching an intended destination or a potential collision. In some embodiments, the vehicle control module 811 may be used to adjust sensors such as the sensors 803 of the vehicle. For example, the vehicle control module 811 may modify the orientation of the sensors 803, change the output resolution and/or format type of the sensors 803, increase or decrease a capture rate, adjust a dynamic range, and/or adjust focusing of a camera. Further, the vehicle control module 811 may individually or collectively turn on/off operation of the sensors.

In some embodiments, the vehicle control module 811 may be used to change the parameters of the image preprocessor 805, by means of modifying frequency ranges of filters, adjusting an edge detection parameter for features and/or object detection, adjusting bit depths and channels, or the like. In various embodiments, the vehicle control module 811 may be used to control autonomous driving of the vehicle and/or a driver assistance function of the vehicle.

In some embodiments, the network interface 813 may serve as an internal interface between the block components of the autonomous driving control system 800 and the communication unit 815. Specifically, the network interface 813 may be a communication interface for receiving and/or transmitting data including voice data. In various embodiments, the network interface 813 may be connected via the communication unit 815 to external servers to connect voice calls, receive and/or send text messages, transmit sensor data, update software of the vehicle to the autonomous driving system, or update software of the autonomous driving system of the vehicle.

In various embodiments, the communication unit 815 may include various wireless interfaces of a cellular or WiFi system. For example, the network interface 813 may be used to receive updates of operation parameters and/or instructions for the sensors 803, the image preprocessor 805, the deep learning network 807, the AI processor 809, and the vehicle control module 811 from an external server connected via the communication unit 815. For example, a machine learning model of the deep learning network 807 may be updated using the communication unit 815. According to another example embodiment, the communication unit 815 may be used to update the operation parameters of the image preprocessor 805, such as image processing parameters, and/or the firmware of the sensors 803.

In another embodiment, the communication unit 815 may be used to activate communication for emergency contact with emergency services in an event of an accident or a near accident. For example, in a collision event, the communication unit 815 may be used to call emergency services for help, and may be also used to inform the emergency services of the collision details and the location of the vehicle. In various embodiments, the communication unit 815 may update or obtain an expected arrival time and/or a destination location.

According to an embodiment, the autonomous driving system 800 illustrated in FIG. 8 may be configured as an electronic device of a vehicle. According to an embodiment, when an autonomous driving release event occurs from the user during the autonomous driving of the vehicle, the AI processor 809 of the autonomous driving system 800 may control to train the autonomous driving software of the vehicle, by performing a control to input information related to the autonomous driving release event as train set data of the deep learning network.

FIGS. 9 and 10 are examples of block diagrams illustrating an autonomous vehicle according to an embodiment. Referring to FIG. 9, an autonomous driving mobile vehicle 900 according to the present embodiment may include a control device 1000, sensing modules (904a, 904b, 904c, 904d), an engine 906, and a user interface 908.

The autonomous driving mobile vehicle 900 may have an autonomous driving mode or a manual mode. For example, according to a user input received via the user interface 908, the manual mode may be switched to the autonomous driving mode, or the autonomous driving mode may be switched to the manual mode.

When the mobile vehicle 900 is operated in the autonomous driving mode, the autonomous driving mobile vehicle 900 may travel under the control of the control device 1000.

In this embodiment, the control device 1000 may include a controller 1020 including a memory 1022 and a processor 1024, a sensor 1010, a wireless communication device 1030, and an object detection device 1040.

Here, the object detection device 1040 may perform all or some functions of a distance measuring device (e.g.,

the electronic device 101).

That is, according to this embodiment, the object detection device 1040 is a device for detecting an object located outside the mobile vehicle 900, and the object detection device 1040 may detect an object located outside the mobile vehicle 900 and generate object information according to the detection result.

The object information may include information on the presence or absence of the object, location information of the object, distance information between the mobile vehicle and the object, and relative speed information between the mobile vehicle and the object.

The object may include various objects including traffic lanes, another vehicles, pedestrians, traffic signals, light, roads, structures, speed bumps, topographical features, animals, and the like located outside the mobile vehicle 900. Here, the traffic signal may include traffic lights, traffic signs, patterns or text drawn on a road surface. The light may include light generated from a lamp installed in another vehicle, light generated from street lamps, or sunlight.

Further, the structure may include an object located around the roadway and fixed to the ground. For example, the structure may include a street lamp, a street tree, a building, a telephone pole, a traffic light, and a bridge. Topographical features may include mountains, hills, and the like.

Such an object detection device 1040 may include a camera module 1050. The controller 1020 may extract object information from an external image captured by the camera module 1050 and allow the controller 1020 to process the information.

Further, the object detection device 1040 may further include imaging devices for recognizing an external environment. In addition to LIDAR, RADAR, GPS devices, odometry devices, other computer vision devices, ultrasonic sensors, and infrared sensors may be utilized, and these devices may be selected or operated simultaneously as needed to enable more precise detection.

Meanwhile, the distance measuring apparatus according to an embodiment of the disclosure may calculate a distance between the autonomous driving mobile vehicle 900 and the object, and control the operation of the mobile vehicle based on the distance calculated in association with the control device 1000 of the autonomous driving mobile vehicle 900.

For example, when there is a possibility of collision depending upon the distance between the autonomous driving mobile vehicle 900 and the object, the autonomous driving mobile vehicle 900 may control a brake to slow down or stop. As another example, when the object is a moving vehicle, the autonomous driving mobile vehicle 900 may control the driving speed of the autonomous driving mobile vehicle 900 to maintain a predetermined distance or more from the object.

The distance measuring device according to an embodiment of the disclosure may be configured as a single module in the control device 1000 of the autonomous driving mobile vehicle 900. That is, the memory 1022 and the processor 1024 of the control device 1000 may implement by software the collision prevention method according to the present invention.

Further, the sensor 1010 may be connected to the sensing modules (904a, 904b, 904c, 904d) to obtain various sensing information. Here, the sensor 1010 may include a posture sensor (e.g., a yaw sensor, a roll sensor, a pitch sensor), a collision sensor, a wheel sensor, a speed sensor, an inclination sensor, a weight sensor, a heading sensor, a gyro sensor, a position module, a mobile vehicle forward/backward sensor, a battery sensor, a fuel sensor, a tire sensor, a steering wheel rotation sensor, an in-vehicle internal temperature sensor, an in-vehicle internal humidity sensor, an ultrasonic sensor, an illuminance sensor, an accelerator pedal position sensor, a brake pedal position sensor, and the like.

As such, the sensor 1010 may obtain various sensing signals for mobile vehicle posture information, mobile vehicle collision information, mobile vehicle directional information, mobile vehicle positional information (GPS information), mobile vehicle angle information, mobile vehicle speed information, mobile vehicle acceleration information, mobile vehicle inclination information, mobile vehicle forward/backward information, battery information, fuel information, tire information, mobile vehicle lamp information, mobile vehicle internal temperature information, mobile vehicle internal humidity information, steering wheel rotation angle, mobile vehicle external illuminance, pressure applied to an accelerator pedal, pressure applied to a brake pedal, and the like.

Further, the sensor 1010 may further include an accelerator pedal sensor, a pressure sensor, an engine speed sensor, an air flow rate sensor (AFS), an intake temperature sensor (ATS), a water temperature sensor (WTS), a throttle position sensor (TPS), a top dead center (TDC) sensor, a crank angle sensor (CAS), and the like.

As such, the sensor 1010 may generate mobile vehicle state information based on various sensing data.

The wireless communication device 1030 may be configured to implement wireless communication between the autonomous driving mobile vehicles 900. For example, the autonomous driving mobile vehicle 900 may enable the autonomous driving mobile vehicle 900 to communicate with a mobile phone of a user, another wireless communication device 1030, another mobile vehicle, a central traffic control device, a server, or the like. The wireless communication device 1030 may transmit and receive wireless signals according to a designated wireless communication access protocol. The wireless communication protocol may be based on Wi-Fi, Bluetooth, Long-Term Evolution (LTE), Code Division Multiple Access (CDMA), Wideband Code Division Multiple Access (WCDMA), Global Systems for Mobile Communications (GSM) or the like, and the communication protocol is not limited thereto.

In the present embodiment, the autonomous driving mobile vehicle 900 may implement communication between mobile vehicles through the wireless communication device 1030. In other words, the wireless communication device 1030 may communicate with another mobile vehicle and other vehicles on the road using vehicle-to-vehicle (V2V) communication. The autonomous driving mobile vehicle 900 may transmit and receive information, such as driving warnings or traffic information using the V2V communication, and may request information or receive a request to/from another mobile vehicle. For example, the wireless communication device 1030 may perform the V2V communication with a dedicated short-range communication (DSRC) device or a cellular-V2V (C-V2V) device. In addition to communication between vehicles, vehicle-to-everything (V2X) communication between vehicles and other objects (e.g., electronic devices carried by pedestrians or the like) may also be implemented through the wireless communication device 1030.

In this embodiment, the controller 1020 is a unit that controls the overall operation of each unit in the mobile vehicle 900, and may be configured at the time of manufacture by a manufacturer of the mobile vehicle 900 or may be additionally configured to perform an autonomous driving function after its manufacture. Alternatively, a configuration for continuously performing an additional function may be incorporated into the controller 1020 by upgrading the controller configured during its manufacturing. This controller 1020 may be referred to as an electronic control unit (ECU).

The controller 1020 may collect various data from the connected sensor 1010, the object detection device 1040, the wireless communication device 1030, and the like, and may transmit a control signal to the sensor 1010, the engine 906, the user interface 908, the wireless communication device 1030, and the object detection device 1040 included as other components in the mobile vehicle, based on the collected data. Further, although not illustrated herein, the control signal may be transmitted to an acceleration device, a braking system, a steering device, or a navigation device related to driving of a mobile vehicle.

In the present embodiment, the controller 1020 may control the engine 906, and for example, the controller 1020 may control the engine 906 to detect the speed limit on the road on which the autonomous driving mobile vehicle 900 is travelling and to prevent the driving speed from exceeding the speed limit, or may control the engine 906 to accelerate the driving speed of the autonomous driving mobile vehicle 900 within a range not exceeding the speed limit.

Further, when the autonomous driving mobile vehicle 900 is approaching the lane or is departing from the lane while the driving of the autonomous driving mobile vehicle 900, the controller 1020 may determine whether such an approaching or departure is due to a normal driving condition or any other driving conditions, and may control the engine 906 to control the driving of the mobile vehicle based on a result of the determination. Specifically, the autonomous driving mobile vehicle 900 may detect lanes formed on both sides of the roadway on which the vehicle is driving. In this case, the controller 1020 may determine whether the autonomous driving mobile vehicle 900 approaches the lane or leaves the lane, and if it is determined that the autonomous driving mobile vehicle 900 approaches the lane or leaves the lane, the controller 1020 may determine whether such driving is in accordance with a normal driving condition or any other abnormal driving conditions. Here, an example of a normal driving condition may be a situation in which it is necessary to change the driving lane of the mobile vehicle. In addition, an example of other driving conditions may be a situation in which it is not necessary to change the driving lane of the mobile vehicle. When it is determined that the autonomous driving mobile vehicle 900 approaches the lane or leaves the lane in a situation where it is not necessary to change the driving lane of the mobile vehicle, the controller 1020 may control the driving of the autonomous driving mobile vehicle 900 so that the autonomous driving mobile vehicle 900 does not leave the driving lane and keeps on driving on the current lane.

When another mobile vehicle or an obstruction exists in front of the mobile vehicle, the controller 1020 may control the engine 906 or the braking system to decrease the driving speed of the mobile vehicle, and may control a trajectory, a driving route, and a steering angle in addition to the driving speed. Alternatively, the controller 1020 may control the driving of the mobile vehicle by generating a necessary control signal according to other external environment recognition information, such as the driving lane, the driving signal, or the like of the mobile vehicle.

In addition to generating its own control signal, the controller 1020 may communicate with a neighboring mobile vehicle or a central server and transmit a command for controlling its peripheral devices through information received therefrom, thereby controlling the driving of the mobile vehicle.

Further, when the position of the camera module 1050 is changed or its angle of view is changed, it may be difficult for the controller to accurately recognize the mobile vehicle or its driving lane according to the present embodiment, and therefore, the controller may generate a control signal for controlling to perform calibration of the camera module 1050 to prevent this difficulty. Accordingly, in this embodiment, the controller 1020 may generate a calibration control signal to the camera module 1050, so that even if the mounting position of the camera module 1050 is changed due to vibration or impact generated according to the movement of the autonomous driving mobile vehicle 900, the normal mounting position, direction, angle of view, etc. of the camera module 1050 may be continuously maintained. In case where the pre-stored initial mounting position, direction, and angle of view information of the camera module 1050 become different from the initial mounting position, direction, and angle of view information of the camera module 1050 measured during the driving of the autonomous driving mobile vehicle 900 by a threshold value or more, the controller 1020 may generate a control signal to perform calibration of the camera module 1050.

In this embodiment, the controller 1020 may include a memory 1022 and a processor 1024. The processor 1024 may execute software stored in the memory 1022 according to a control signal from the controller 1020. Specifically, the controller 1020 may store data and instructions for performing the lane detection method according to the disclosure in the memory 1022, and the instructions may be executed by the processor 1024 to implement one or more methods disclosed herein.

In such a case, the memory 1022 may be incorporated into a non-volatile recording medium executable by the processor 1024. The memory 1022 may store software and data through appropriate internal and external devices. The memory 1022 may include a random access memory (RAM), a read only memory (ROM), a hard disk, and a memory 1022 connected to a dongle.

The memory 1022 may store an operating system (OS), a user application, and executable instructions. The memory 1022 may also store application data and array data structures.

The processor 1024 may be a microprocessor or an appropriate electronic processor, and may include a controller, a microcontroller, or a state machine.

The processor 1024 may be implemented as a combination of computing devices, and the computing device may include a digital signal processor, a microprocessor, or an appropriate combination thereof.

Meanwhile, the autonomous driving mobile vehicle 900 may further include a user interface 908 for a user input to the control device 1000 described above. The user interface 908 may allow the user to input information with an appropriate interaction. For example, it may be implemented as a touch screen, a keypad, a manipulation button, etc. The user interface 908 may transmit an input or command to the controller 1020, and the controller 1020 may perform a control operation of the mobile vehicle in response to the input or command.

Further, the user interface 908 may allow a device outside the autonomous driving mobile vehicle 900 to communicate with the autonomous driving mobile vehicle 900 via the wireless communication device 1030. For example, the user interface 908 may allow interworking with a mobile phone, a tablet, or other computer devices.

Furthermore, in the present embodiment, it has been described that the autonomous driving mobile vehicle 900 includes the engine 906, but it is also possible to include another type of propulsion system. For example, the mobile vehicle may operate with electrical energy or hydrogen energy or with a hybrid system in combination of these. Accordingly, the controller 1020 may include a propulsion mechanism according to a propulsion system of the autonomous driving mobile vehicle 900, and may provide control signals to components of each propulsion mechanism.

Hereinafter, a detailed configuration of the control device 1000 according to an embodiment will be described in more detail with reference to FIG. 10.

The control device 1000 may include a processor 1024. The processor 1024 may be a general-purpose single-chip or multi-chip microprocessor, a dedicated microprocessor, a microcontroller, a programmable gate array, or the like. The processor may be referred to as a central processing unit (CPU). In this embodiment, the processor 1024 may be used with a combination of a plurality of processors.

The control device 1000 may also include a memory 1022. The memory 1022 may be any electronic component capable of storing electronic information. The memory 1022 may also include a combination of the memories 1022 in addition to a single memory.

Data and instructions 1022a for performing the distance measuring method of the distance measuring device according to the disclosure may be stored in the memory 1022. When the processor 1024 executes the instructions 1022a, all or some of the instructions 1022a and the data 1022b required for executing the instructions may be loaded (1024a, 1024b) into the processor 2024.

The control device 1000 may include a transmitter 1030a, a receiver 1030b, or a transceiver 1030c for allowing transmission and reception of signals. One or more antennas (1032a, 1032b) may be electrically connected to the transmitter 1030a, the receiver 1030b, or each transceiver 1030c, or may further include antennas.

The control device 1000 may include a digital signal processor (DSP) 1070. The DSP 1070 may allow the mobile vehicle to quickly process digital signals.

The control device 1000 may include a communication interface 1080. The communication interface 1080 may include one or more ports and/or communication modules for connecting other devices to the control device 1000. The communication interface 1080 may allow the user and the control device 1000 to interact with each other.

Various components of the control device 1000 may be connected together by one or more buses 1090, and the buses 1090 may include a power bus, a control signal bus, a state signal bus, a data bus, and the like. In accordance with the control of the processor 1024, the components may transmit information through the bus 1090 to each other and perform a desired function.

Meanwhile, in various embodiments, the control device 1000 may be related to a gateway for communication with a secure cloud. For example, referring to FIG. 11, the control device 1000 may be related to a gateway 1105 for providing information obtained from at least one of the components 1101 to 1104 of the vehicle 1100 to a security cloud 1106. For example, the gateway 1105 may be included in the control device 1000. As another example, the gateway 1105 may be configured as a separate device in the vehicle 1100, which is distinct from the control device 1000. The gateway 1105 connects a software management cloud 1109, the security cloud 1106, and a network with in the vehicle 1100 secured by an in-car security software 1110, which have different networks, to communicate with each other.

For example, the component 1101 may be a sensor. For example, the sensor may be used to obtain information about at least one of a state of the vehicle 1100 or a state around the vehicle 1100. For example, the component 1101 may include a sensor 1410.

For example, the components 1102 may include electronic control units (ECUs). For example, the ECUs may be used for engine control, transmission control, airbag control, and tire air pressure management.

For example, the component 1103 may be an instrument cluster. For example, the instrument cluster may mean a panel positioned in front of a driver's seat of a dashboard. For example, the instrument cluster may be configured to show information necessary for driving to the driver (or passengers). For example, the instrument cluster may be used to display at least one of visual elements for indicating a revolutions per minute (RPM) or a rotation per minute of an engine, visual elements for indicating a speed of the vehicle 1100, visual elements for indicating a remaining fuel amount, visual elements for indicating a state of a transmission gear, or visual elements for indicating information obtained through the component 1101.

For example, the component 1104 may be a telematics device. For example, the telematics device may refer to a device that provides various mobile communication services, such as location information, safe driving or the like in the vehicle 1100, by combining wireless communication technology and global positioning system (GPS) technology. For example, the telematics device may be used to connect the vehicle 1100 with a driver, a cloud (e.g., the secure cloud 1106), and/or a surrounding environment. For example, the telematics device may be configured to support high bandwidth and low latency for a technology of a 5G NR standard (e.g., V2X technology of 5G NR). The telematics device may be configured to support autonomous driving of the vehicle 1100.

For example, the gateway 1105 may be used to connect the network inside the vehicle 1100 with the software management cloud 1109 and the security cloud 1106, which are networks outside the vehicle 1100. For example, the software management cloud 1109 may be used to update or manage at least some of software necessary for driving and managing the vehicle 1100. For example, the software management cloud 1109 may interwork with the in-car security software 1110 installed in the vehicle. For example, the in-car security software 1110 may be used to provide a security function in the vehicle 1100. For example, the in-car security software 1110 may encrypt data transmitted and received through the in-car network using an encryption key obtained from an external authorized server for encryption of the network in the vehicle. In various embodiments, the encryption key used by the in-car security software 1110 may be generated to correspond to vehicle identification information (vehicle license plate, vehicle identification number (VIN)) or information uniquely assigned to each user (e.g., user identification information).

In various embodiments, the gateway 1105 may transmit data encrypted by the in-car secure software 1110 based on the encryption key to the software management cloud 1109 and/or the security cloud 1106. The software management cloud 1109 and/or the security cloud 1106 may decrypt the data encrypted by the encryption key of the in-car security software 1110 using a decryption key, thereby identifying from which vehicle or user the data has been received. For example, since the decryption key is a unique key corresponding to the encryption key, the software management cloud 1109 and/or the security cloud 1106 may identify a sending entity (e.g., the vehicle or the user) of the data, based on the data decrypted through the decryption key.

For example, the gateway 1105 may be configured to support the in-car security software 1110 and may be related to the control device 1000. For example, the gateway 1105 may be related to the control device 1000 to support a connection between the client device 1107 connected to the security cloud 1106 and the control device 1000. As another example, the gateway 1105 may be related to the control device 1000 to support a connection between the third party cloud 1108 connected to the security cloud 1106 and the control device 1000. However, the disclosure is not limited thereto.

In various embodiments, the gateway 1105 may be used to connect the software management cloud 1109 for managing an operation software of the vehicle 1100 with the vehicle 1100. For example, the software management cloud 1109 may monitor whether an update of the operating software of the vehicle 1100 is required, and may provide data for updating the operating software of the vehicle 1100 through the gateway 1105, based on monitoring that the update of the operating software of the vehicle 1100 is required. In another example, the software management cloud 1109 may receive a user request requesting an update of the operating software of the vehicle 1100, from the vehicle 1100 through the gateway 1105, and may provide data for updating the operating software of the vehicle 1100, based on the received user request. However, the disclosure is not limited thereto.

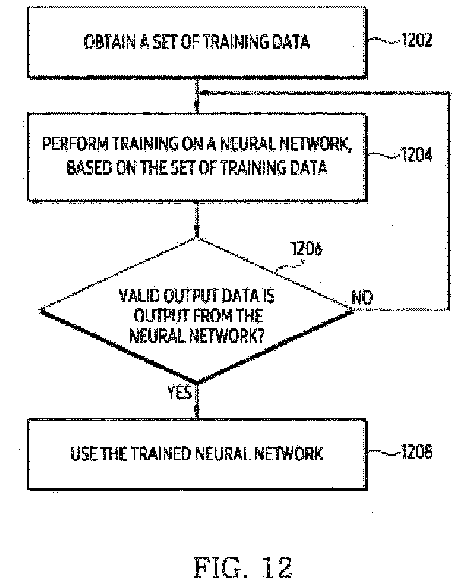

FIG. 12 is an example of a flowchart for describing an operation of the electronic device 101 for training a neural network based on a set of training data, according to an embodiment. The operation described with reference to FIG. 12 may be performed by the electronic device of FIGS. 1A to 11.

Referring to FIG. 12, in operation 1202, the electronic device according to an embodiment may obtain a set of training data. The electronic device may obtain a set of training data for a supervised learning. The training data may include a pair of input data and ground truth data corresponding to the input data. The ground truth data may represent output data to be obtained from a neural network receiving input data that makes up one pair of the ground truth data. The ground truth data may be obtained by the electronic device described with reference to FIGS. 1A to 12.

For example, when a neural network is trained for recognition of an image, the training data may include an image and information on one or more subjects included in the image. The information may include a category or class of the subject identifiable through the image. The information may include a position, a width, a height, and/or a size of a visual object corresponding to the subject in the image. A set of training data identified through operation 1202 may include pairs of a plurality of training data. In the example of training a neural network for recognition of an image, the set of training data identified by the electronic device may include a plurality of images and ground truth data corresponding to each of the plurality of images.

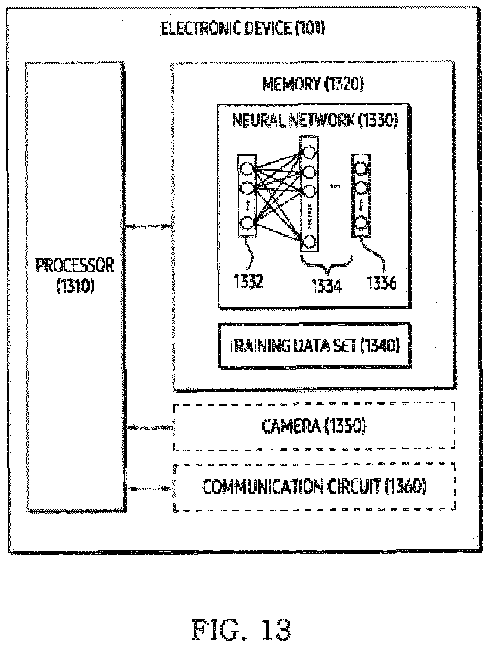

Referring to FIG. 12, in operation 1204, the electronic device according to an embodiment may perform training on a neural network, based on a set of training data. According to an embodiment where the neural network is trained based on a supervised learning, the electronic device may input input data included in the training data to an input layer of the neural network. An example of the neural network including the input layer will be described with reference to FIG. 13. The electronic device may obtain output data of the neural network corresponding to the input data from the output layer of the neural network receiving the input data through the input layer.

In an embodiment, the training of operation 1204 may be performed based on a difference between the output data and ground truth data included in the training data and corresponding to the input data. For example, the electronic device may adjust one or more parameters (e.g., a weight to be described later with reference to FIG. 13) related to the neural network such that the difference is reduced, based on a gradient descent algorithm. The operation of the electronic device for adjusting the one or more parameters may be referred to as tuning for a neural network. The electronic device may perform the tuning of the neural network based on the output data, using a function defined to evaluate the performance of the neural network, such as a cost function. The difference between the above-described output data and the ground truth data may be included as an example of the cost function.

Referring to FIG. 12, in operation 1206, the electronic device according to an embodiment may identify whether valid output data is output from the neural network trained by operation 1204. When the output data is valid, it may mean that the difference (or a cost function) between the output data and the ground truth data satisfies a condition set for using of the neural network. For example, when an average value and/or a maximum value of the difference between the output data and the ground truth data is less than or equal to a designated threshold value, the electronic device may determine that the valid output data is output from the neural network.

When any valid output data is not output from the neural network (NO - operation 1206), the electronic device may repeatedly perform the training of the neural network based on operation 1204. Embodiments of the disclosure are not limited thereto, and the electronic device may repeatedly perform operations 1202 and 1304.

In a state of obtaining the valid output data from the neural network (YES - operation 1206), the electronic device according to an embodiment may use the trained neural network, based on operation 1208. For example, the electronic device may input, to the neural network, other input data distinct from the input data input to the neural network as training data. The electronic device may use the output data obtained from the neural network receiving the other input data, as a result of performing inference on the other input data based on the neural network.

FIG. 13 is a block diagram of an electronic device 101, according to an embodiment. The electronic device 101 of FIG. 13 may include the electronic device of FIGS. 1 through 12. For example, the operation described with reference to FIG. 12 may be performed by the electronic device 101 of FIG. 13 and/or the processor 1310 of FIG. 13.

Referring to FIG. 13, a processor 1310 of the electronic device 101 may perform computations related to a neural network 1330 stored in a memory 1320. The processor 1310 may include at least one of a center processing unit (CPU), a graphic processing unit (GPU), or a neural processing unit (NPU). The NPU may be implemented as a separate chip from the CPU, or may be integrated into the same chip as the CPU in the form of a system on a chip (SoC). The NPU integrated into the CPU may be referred to as a neural core and/or an artificial intelligence (AI) accelerator.

Referring to FIG. 13, the processor 1310 may identify the neural network 1330 stored in the memory 1320. The neural network 1330 may include a combination of an input layer 1332, one or more hidden layers 1334 (or intermediate layers), and an output layer 1336. The aforementioned layers (e.g., input layer 1332, one or more hidden layers 1334, and output layer 1336) may include a plurality of nodes. The number of hidden layers 1334 may vary depending on various embodiments, and the neural network 1330 including a plurality of hidden layers 1334 may be referred to as a deep neural network. The operation of training the deep neural network may be referred to as deep-learning.

In an embodiment, in case where the neural network 1330 has the structure of a feed forward neural network, a first node included in a particular layer may be connected to all of second nodes included in other layers prior to that particular layer. In the memory 1320, the parameters stored for the neural network 1330 may include weights assigned to the connections between the second nodes and the first node. In the neural network 1330 having the structure of a feed forward neural network, a value of the first node may correspond to a weighted sum of the values assigned to the second nodes, based on the weights assigned to the connections connecting the second nodes and the first node.

In an embodiment, in case where the neural network 1330 has the structure of a convolutional neural network, a first node included in a particular layer may correspond to a weighted sum of some of second nodes included in other layers prior to the particular layer. Some of the second nodes corresponding to the first node may be identified by a filter corresponding to the specific layer. In the memory 1320, the parameters stored for the neural network 1330 may include weights indicating the filter. The filter may include one or more nodes to be used in calculating the weighted sum of the first node, among the second nodes, and weights corresponding to each of the one or more nodes.

According to an embodiment, the processor 1310 of the electronic device 101 may perform training for the neural network 1330, using a training data set 1340 stored in the memory 1320. Based on the training data set 1340, the processor 1310 may adjust one or more parameters stored in the memory 1320 for the neural network 1330, by performing the operation described with reference to FIG. 12.

The processor 1310 of the electronic device 101 according to an embodiment may perform object detection, object recognition, and/or object classification, using the neural network 1330 trained based on the training data set 1340. The processor 1310 may input an image (or video) obtained through a camera 1350 to the input layer 1332 of the neural network 1330. Based on the input layer 1332 to which the image is input, the processor 1310 may sequentially obtain values of nodes of layers included in the neural network 1330 to obtain a set of values (e.g., output data) of the nodes of the output layer 1336. The output data may be used as a result of inferring information included in the image using the neural network 1330. Embodiments of the disclosure are not limited thereto, and the processor 1310 may input an image (or video) obtained from an external electronic device connected to the electronic device 101 through a communication circuit 1360, to the neural network 1330.

In an embodiment, the neural network 1330 trained to process an image may be used to identify an area corresponding to a subject in the image (object detection) and/or identify a class of the subject represented in the image (object recognition and/or object classification). For example, the electronic device 101 may use the neural network 1330 to segment an area corresponding to the subject in the image, based on a rectangular shape such as a bounding box. For example, the electronic device 101 may use the neural network 1330 to identify at least one class matching the subject from among a plurality of specified classes.

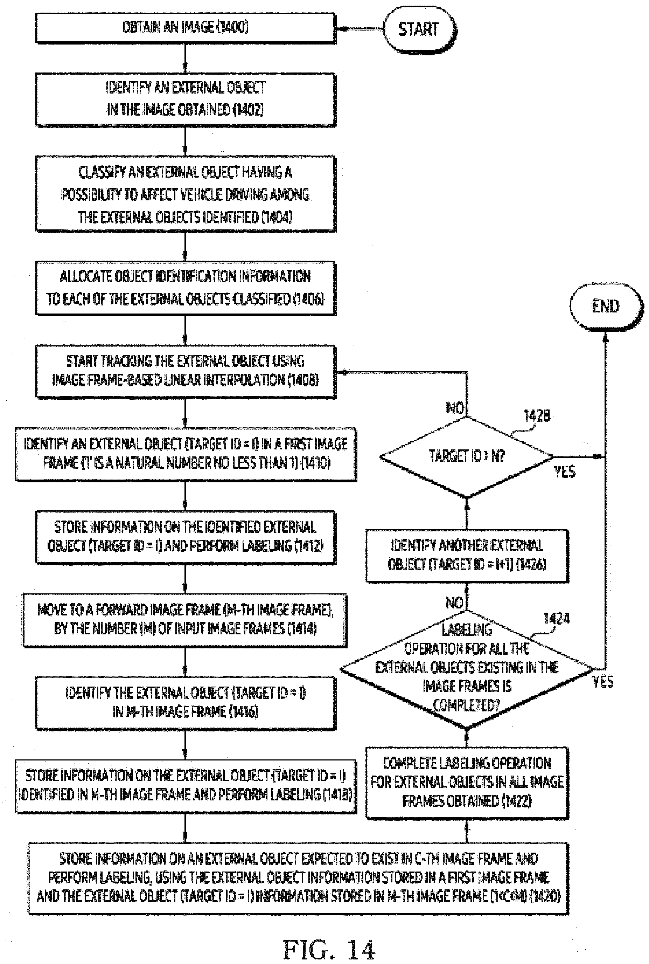

FIG. 14 is an example of a flowchart for describing an operation of an electronic device according to an embodiment. The operation of the electronic device described with reference to FIG. 14 may be performed by the electronic device 101 and/or the processor 210 of FIGS. 1A, 1B, and 2.

Referring to FIG. 14, in operation 1400, the processor of the electronic device according to an embodiment may obtain an image. The image may be identified in a sequence (e.g., a video) of images continuously obtained by a camera. The image in operation 1400 may be referred to as an image frame.

Referring to FIG. 14, in operation 1402, the processor of the electronic device according to an embodiment may identify an external object in the obtained image. The external object may be identified based on object recognition. For example, the electronic device may identify the position and/or class of the external object in the image, based on a neural network trained for object recognition.

Referring to FIG. 14, in operation 1404, the processor of the electronic device according to an embodiment may classify an external object having a possibility to affect vehicle driving among the external objects identified based on operation 1402. The processor may perform operation 1404 by comparing such a possibility of the external object identified in the image with a specified threshold value. Based on operation 1404, the processor may identify at least one external object having a possibility of exceeding the specified threshold value.

Referring to FIG. 14, in operation 1406, the processor of the electronic device according to an embodiment may allocate object identification information to each of the external objects classified by operation 1404. The object identification information may include an identifier (or key value) uniquely assigned to an external object. The identifier may be assigned based on a natural number. The object identification information may include at least one of a position, a class, and/or the identifier of the external object in the image of operation 1400.

Referring to FIG. 14, in operation 1408, the processor of the electronic device according to an embodiment may start tracking the external object, using an image frame-based linear interpolation method. For example, in operation 1410, the processor of the electronic device according to an embodiment may identify an external object having a specific identifier (e.g., a natural number i gradually increasing from 1) as an identifier in the first image frame.

Referring to FIG. 14, in operation 1412, the processor of the electronic device according to an embodiment may store information on the external object identified based on operation 1410 and may perform labeling. Based on the labeling, the processor may obtain labeling data for the specific identifier.

Referring to FIG. 14, in operation 1414, the processor of the electronic device according to an embodiment may cause to move to an m-th image frame spaced apart from a first image frame by the number of input image frames. In operation 1416, the processor of the electronic device according to an embodiment may identify an external object having the natural number i of operation 1410 as an identifier in the m-th image frame. In operation 1418, the processor of the electronic device according to an embodiment may store information on the external object identified in the m-th image frame and perform labeling.

Referring to FIG. 14, in operation 1420, the processor of the electronic device according to an embodiment may store information on external object expected to exist in the c-th image frame and perform labeling, using the external object information stored in the first image frame and the external object information stored in the m-th image frame. The numeral 'c' may be a natural number greater than 1 and less than m. The external object information obtained for the c-th image frame in operation 1 (1420) may correspond to an external object having the natural number i as an identifier.

Referring to FIG. 14, in operation 1422, the processor of the electronic device according to an embodiment may complete a labeling operation for external objects (e.g., the external object having a natural number i as an identifier) in all image frames obtained. For example, in operation 1424, the processor may identify whether the labeling operation for all the external objects existing in the image frames is completed. When the labeling operation for all the external objects is not completed (NO - operation 1424), the processor of the electronic device may perform operation 1426.

Referring to FIG. 14, in operation 1426, the processor of the electronic device according to an embodiment may identify another external object. For example, based on an increase of the natural number i, the processor may identify another external object distinguished from the external object having the natural number i as an identifier. Referring to FIG. 14, in operation 1428, the processor of the electronic device according to an embodiment may identify whether the increased identifier based on operation 1426 exceeds the number n of external objects identified based on operation 1402. When the identifiers exceeds the number of external objects (YES - operation 1428), the processor may cease the labeling operation. When the identifier is less than or equal to the number (NO - operation 1428), the processor may perform tracking of the external object having the increased identifier based on operation 1426.

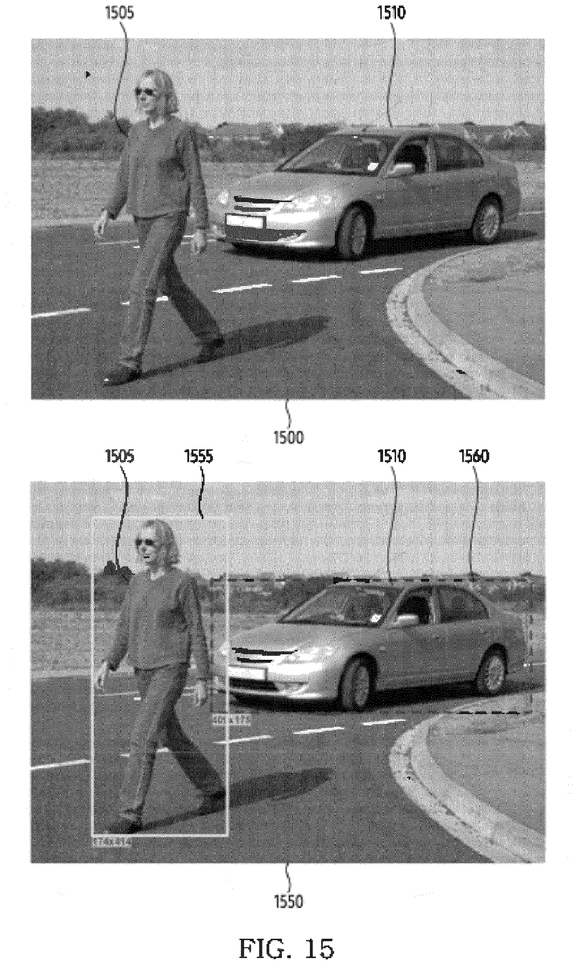

FIG. 15 is a diagram for illustrating a process of obtaining labeling data related to an area selected by a user input in an image, according to an embodiment of the disclosure. In FIG. 15, reference numeral 1500 indicates an image frame for generating labeling data, and reference numerals 1505 and 1510 indicate external objects existing in the image frame 1500, respectively.

The reference numeral 1550 represents that for generating labeling data corresponding to external objects 1505 and 1510 according to an embodiment of the disclosure, the electronic device displays, by a user input, bounding boxes 1555 and 1560 corresponding to the external objects 1505 and 1510, respectively, and displays pixel values having a horizontal and vertical size of each of the bounding boxes 1555 and 1560. According to an embodiment, the electronic device may identify an input to the bounding boxes 1555 and 1560 based on the operation described with reference to FIG. 1B.

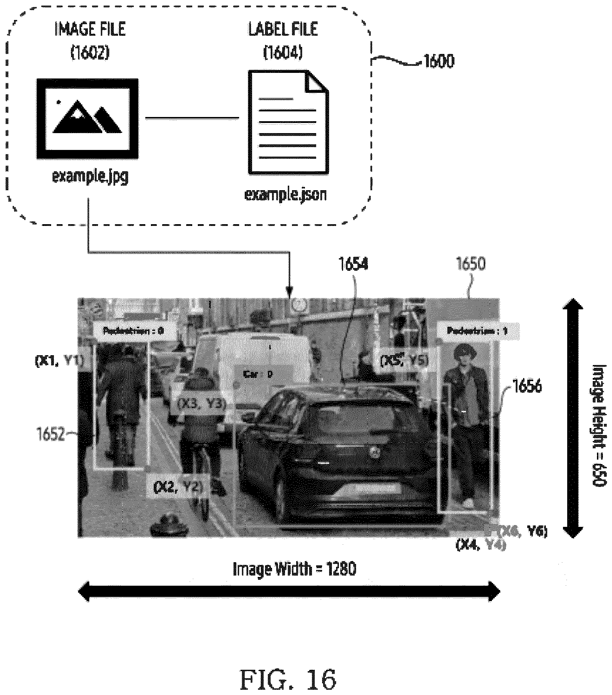

FIG. 16 is a diagram illustrating a process of generating labeling data for learning for object identification in an image, according to an embodiment of the disclosure.

In order to generate labeling data for training for object identification in an image, the processor of the electronic device according to an embodiment of the disclosure may manage an image file 1602 to be trained and a label file 1604 labeled for that image file as one pair and store the same in a storage device.

FIG. 16 illustrates that a video compression format "jpg" is used as a format of the image file 1602 to be learned, but it is only of an example and embodiments of the disclosure are not limited thereto. For example, it may be also possible to use various video compression formats such as e.g., "png" or "gif" as the format of the image file 1602.

Further, FIG. 16 illustrates that the extension of a label file 1604 for the image file 1602 is "json", but it is only of an embodiment for describing a case of using the Java Script Object Notation (JSON), which is a type of format representing data structured by the Javascript object grammar of labeling information of objects in the image file 1602, and the embodiment of the disclosure is not limited thereto. For example, any format of a dataset capable of representing various hierarchical data structures, such as e.g., eXtensible Markup Language (XML), Comma-separated Values (CSV), Common Object in Context (COCO), Visual Object Classes (VOC), Tensor Flow Record (TFRecord), or the like may be used as a format of the labeling data, and the labeling data format may vary depending on a tool used for labeling.

In FIG. 16, reference numeral 1650 indicates an example of the image file 1602 for which labeling data for object detection is to be generated according to an embodiment of the disclosure. The image frame 1650 has a size of 1280 pixels horizontally and 650 pixels vertically, and there are three objects to generate labeling data in the image frame 1650, inclusive of two pedestrian objects and one vehicle object. Specifically, reference numeral 1652 denotes a bounding box corresponding to a pedestrian object 0, reference numeral 1654 denotes a bounding box for a vehicle object 0, and reference numeral 1656 denotes a bounding box corresponding to a pedestrian object 1. In FIG. 16, (X1, Y1) and (X2, Y2) are X-axis and Y-axis coordinate points indicating a position of the bounding box 1652 in the image frame 1650, and may indicate a vertex at an upper left end and a vertex at a lower right end of the bounding box 1652, respectively.

Further, in FIG. 16, (X3, Y3) and (X4, Y4) are X-axis and Y-axis coordinate points indicating the position of the bounding box 1654 in the image frame 1650, and may indicate an upper left vertex and a lower right vertex of the bounding box 1654, respectively. In addition, (X5, Y5) and (X6, Y6) are X-axis and Y-axis coordinate points indicating the position of the bounding box 1656 in the image frame 1650, and may indicate an upper left vertex and a lower right vertex of the bounding box 1656, respectively.

Further, in an embodiment of the disclosure, it can be seen that in FIG. 16, an object class of the pedestrian object in the bounding box 1652 is designated as "pedestrian", an object identifier for tracking the corresponding object is designated as "0", an object class of the vehicle object in the bounding box 1654 is designated as "car", an object identifier for tracking the corresponding object is designated as "0", an object class of the pedestrian object in the bounding box 1656 is designated as "pedestrian", and an object identifier for tracking the corresponding object is designated as "1".

The object classes and the object identifiers shown in FIG. 16 are merely of examples, and may be set differently according to the user's designation.

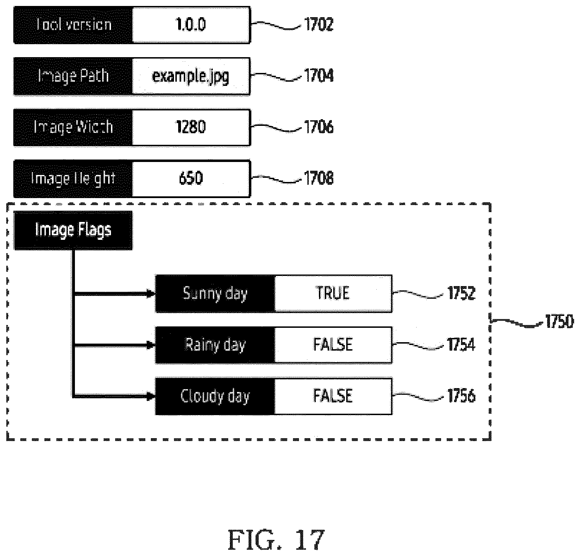

FIG. 17 is a diagram for describing a hierarchical structure of labeling data generated according to an embodiment of the disclosure. Referring to FIG. 17, reference numeral 1702 indicates an example of information on a tool used to generate labeling data in a target file, and reference numeral 1704 indicates an example of a path of a file corresponding to labeling data. The tool information of the reference numeral 1702 may include a type of tool used for labeling, version information of the tool, and the like.

A tool for generating labeling data according to an embodiment of the disclosure is a software program capable of allocating a specific value to training data before performing machine learning or deep learning modeling, and may include "labelImg", "Computer Vison Annotation Tool (CVAT)", "LabelMe", "Labelbox", "VoTT", "imglab", "YOLO Mark", "OpenLabeling", "PixelAnnotationTool", "imagetagger", "Alturos.Image Annotation", "DeepLabel", "MedTagger", "Turktools", "Pixie", "OpenLabeler", "Anno-Mage", "CATMAID", "makesense.ai", "LOST(Label Object and Save Time)", "annotorious", "sloth" and the like. However, these are only of an embodiment of the disclosure, the embodiments of the disclosure is not limited thereto. Specifically, a tool for generating labeling data according to an embodiment of the disclosure may be a software program capable of designate and labeling various types of shapes such as a rectangle, a polygon, a line, a point, and so on in an image for learning object detection and object identification, and storing bounding box-related information in a certain format of data structure. Further, reference numeral 1706 indicates an example of information on a width of a file (image file) corresponding to labeling data, and reference numeral 1708 indicates an example of information on a height of a file (image file) corresponding to labeling data.

Further, reference numeral 1750 is an example of flag information for data subject to labeling data. In an embodiment of the disclosure, the data subject to labeling data is an image file, and the object identification rate and the object detection rate required for autonomous driving are significantly affected by the environmental conditions such as weather (cloudy, sunny, rainy, snowy, etc.) and day and night, so the flag information is set to sunny day, rainy day, or cloudy day, but it does not limit the present invention thereto.

In an embodiment of the disclosure, since the image frame 1650 subject to labeling data is a sunny day, it may be seen in FIG. 17 that among flags included in the image flag 1750, a sunny day flag is assigned as "True", and a rainy day flag and a cloudy day flag are assigned as "False", respectively. In other words, the data illustrated in the reference numeral 1750 of FIG. 17 is merely of an embodiment, and there may be a variety of flags that may be used to increase the object identification rate and the object detection rate.

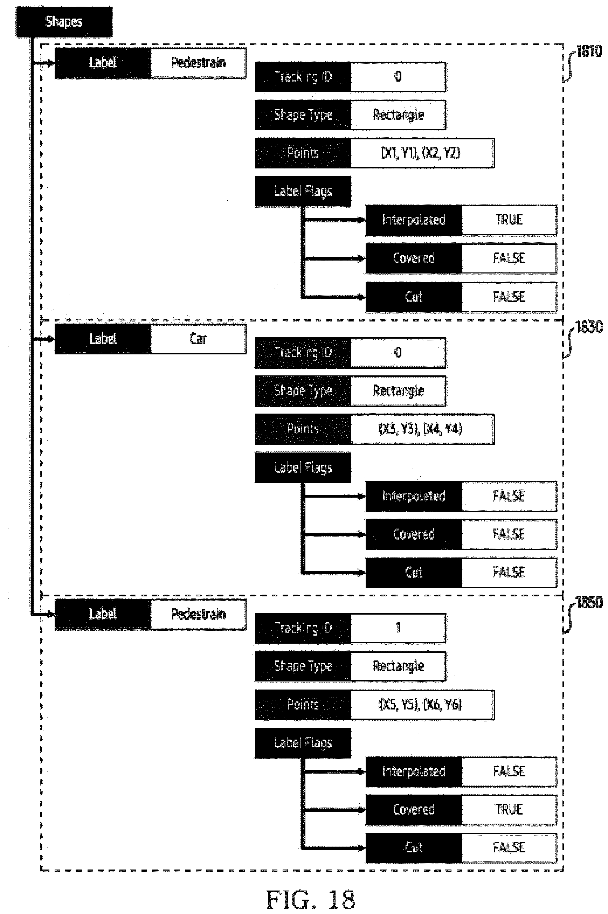

FIG. 18 is a diagram illustrating a hierarchical structure of information on an external object of labeling data generated according to an embodiment of the disclosure. In FIG. 18, reference numeral 1810 illustrates an example of a labeling data structure for a bounding box 1652 corresponding to a pedestrian object 0 of FIG. 16.

The label parameter of reference numeral 1810 is assigned as "Pedestrian" as the object in the bounding box 1652 is a pedestrian, the tracking ID parameter is assigned as "0", the shape type parameter is assigned as "Rectangle", and the points parameter is assigned as at least two vertex coordinates ((X1, Y1), (X2, Y2)) of the bounding box 1652. Further, in FIG. 18, the label flags parameter includes a total of three sub-parameters (interpolated, covered, and cut), and the three sub-parameters indicate whether an object included in the bounding box 1652 is an interpolated object, an object covered by another object, or a partially cut object. Further, it indicates that among the label flags of reference numeral 1810, the "interpolated" parameter is assigned as "True", and both the "covered" parameter and the "cut" parameter are assigned as "False".

The label parameter of reference numeral 1830 is assigned as "Car" as the object in the bounding box 1654 is a vehicle, the tracking ID parameter is assigned as "0", the shape type parameter is assigned as "Rectangle", and the points parameter is assigned as at least two vertex coordinate values ((X3, Y3), (X4, Y4)) of the bounding box 1654. Further, it is indicated that among the label flags of reference numeral 1830, the "interpolated" parameter, the "covered" parameter, and the "cut" parameter are all assigned as "False".

The label parameter of reference numeral 1850 is assigned to "Pedestrian" as the object in the bounding box 1656 is a pedestrian, the tracking ID parameter is assigned to "1" to distinguish from other pedestrian object in the bounding box 1656, the shape type parameter is assigned to "Rectangle", and the points parameter is assigned to at least two vertex coordinate values ((X5, Y5), (X6, Y6)) of the bounding box 1656. Further, it indicates that among the label flags of reference numeral 1850, the "interpolated" parameter, the "covered" parameter, and the "cut" parameter are all assigned as "False".

The information included in the hierarchical structure of the information on the external object of the labeling data illustrated in FIG. 18 is only illustrated as an example to help understanding of the disclosure, and the external object class may further include external objects that have to identified for autonomous driving of the vehicle, such as e.g., "Bus", "Truck", "Pickup Truck", "Sedan", "Sports Utility Vehicle (SUV)", "Bike", "Scooter", "Motor-Cycle" and the like.

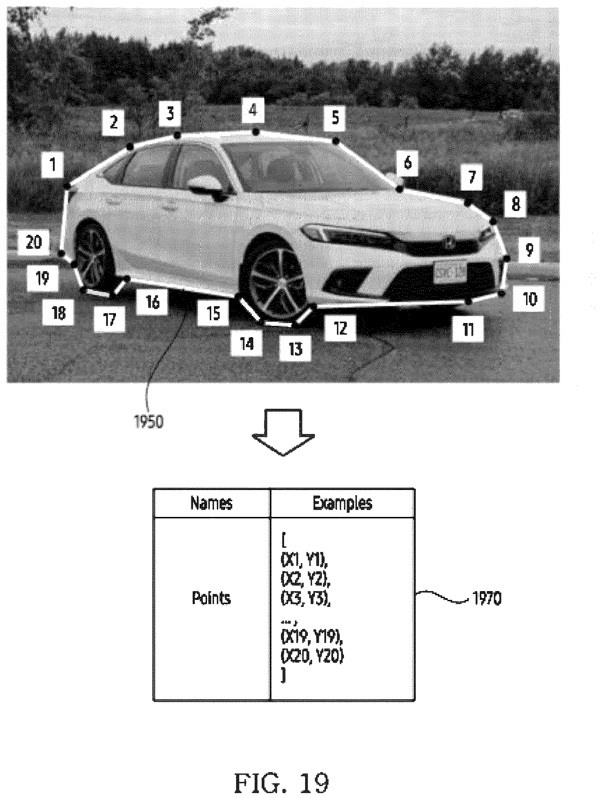

Further, in FIG. 18, a bounding box corresponding to an object to be labeled is assigned as "Rectangle", the points indicating its positional coordinates are assigned as a pair of two X-axis coordinate and Y-axis coordinate values, but when the shape type is "Polygon", a pair of Y-axis coordinate and X-axis coordinate values of the points generated along the appearance of the object to be labeled by the user are stored in the order of the points generated by the user. According to an embodiment of the disclosure, when the shape type is "Polygon", an example of coordinates allocated to the points parameter will be described later with reference to FIG. 19.

FIG. 19 is a diagram illustrating an example of coordinates allocated to a points parameter when a shape type is a "Polygon", according to an embodiment of the disclosure. Referring to FIG. 19, when "Shape Type" of labeling data for a vehicle 1950 which is an external object in an image frame to be labeled is "Polygon" and the user generates a total of 20 points from 1 to 20, a pair of X-axis coordinate and Y-axis coordinate values from (X1, Y1) to (X20, Y20) corresponding to a total of 20 points from 1 to 20 are assigned, as shown in reference numeral 1970.

The labeling data described in the disclosure may be stored in a storage device of a user's local computer or a storage device of a cloud server.

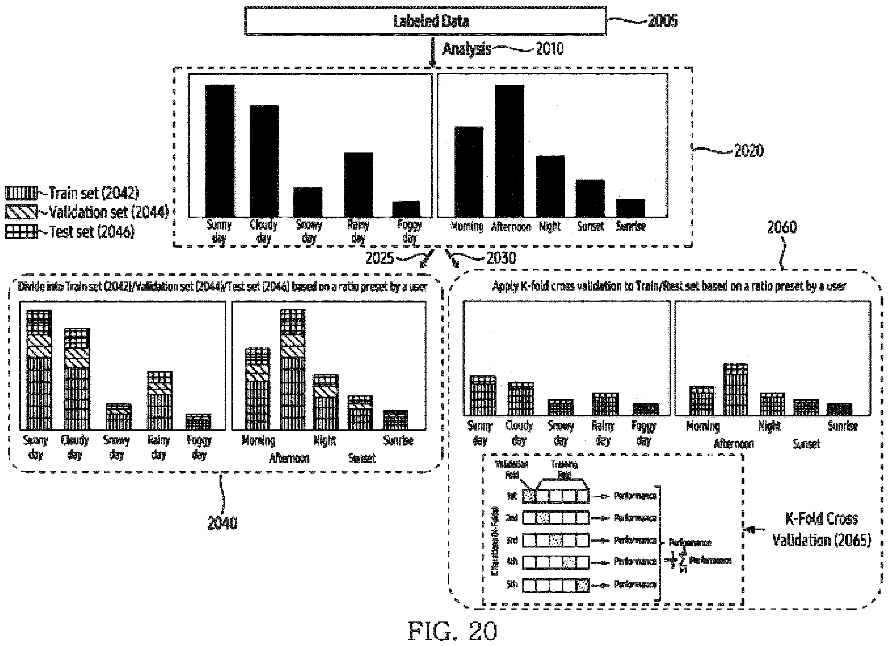

FIG. 20 is a diagram for describing an example of dividing the generated labeling data into a train set, a validation set, and/or a test set for efficient training of a neural network, according to an embodiment of the disclosure.

Referring to FIG. 20, the electronic device according to an embodiment of the disclosure may analyze (2010) the image flag of the labeled data 2005 to classify the labeled data for each analyzed image flag.

The processor of the electronic device according to an embodiment of the disclosure may classify the labeled data 2005, as indicated by reference numeral 2020, based on weather-related flags or time zones, according to image flags. Specifically, in FIG. 20, the labeled data 2010 may be classified into a sunny day, a cloudy day, a snowy day, a rainy day, and a foggy day based on the weather-related flags.

Further, the processor of the electronic device according to an embodiment of the disclosure may classify the labeled data 2005 into morning, afternoon, night, sunset, and sunrise based on the time zone flag according to the image flag.

Further, the processor of the electronic device according to an embodiment of the disclosure may compare the labeled data classified as in reference numeral 2020 with the amount of the labeled data and a value preset by the user, and may determine a classification scheme for classifying the labeled data 2005 into a train set 2042, a validation set 2044, and/or a test set 2046 based on a result of the comparison. In this case, a preset value for determining the classification scheme of the labeled data is a value determined by the user in advance, and may be determined by a prior empirical value or experimental value or the like for determining whether the labeling data has been obtained enough to generate the validation set 2044.

Reference numeral 2040 shows an example of a scheme in which the processor of the electronic device according to an embodiment of the disclosure divides the labeled data 2005 into a train set 2042, a validation set 2044, and/or a test set 2046, when the amount of the labeled data 2005 is greater than the preset value. In this case, in reference numeral 2040, the processor of the electronic device may divide the labeled data into the train set 2042, the validation set 2044, and/or the test set 2046 based on a ratio preset by the user.

On the other hand, reference numeral 2060 shows an example of a scheme in which the processor of the electronic device according to an embodiment of the disclosure divides the labeled data 2005 into the train set 2042 and the test set 2046, when the amount of the labeled data 2005 is less than or equal to the preset value. In this case, the reference numeral 2060 illustrates that the processor of the electronic device divides the labeled data into the train set 2042 and the test set 2046 based on a ratio preset by the user, and uses a K-fold cross validation, which is one of algorithms 2065 for verifying the reliability of the neural network, to verify the reliability of the train set 2042.

As described above, according to an embodiment, an electronic device may comprise memory and a processor. The processor may be configured to identify, from the memory, a first position associated with an external object, among a plurality of images for a video and a first image at a first timing from the plurality of images. The processor may be configured to identify, based on the first position within the first image, a second position associated with the external object within a second image at a second timing after the first timing from the plurality of images. The processor may be configured to obtain, based on the first position and the second position, one or more third positions associated with the external object and corresponding to the one or more third images included in a time section between the first timing and the second timing. The processor may be configured to store, as labeling information indicating motion of the external object identified in the time section of the video, the first position, the one or more third positions, and the second position.

For example, the processor may be configured to obtain the one or more third positions by interpolating, using a length between the first timing and the second timing, a first coordinate indicating the first position within the first image at the first timing, and a second coordinate indicating the second position within the second image at the second timing.

For example, the processor may be configured to obtain the one or more third positions by interpolating the first coordinate and the second coordinate based on timings within the time section of the one or more images.

For example, the processor may be configured to identify, by comparing one or more feature points included in a portion of the first image including the first position corresponding to the external object, and one or more feature points included in a second image corresponding to the external object, the second position within the second image.

For example, the processor may be configured to, based on identifying the second position with respect to the second image at the second timing after a threshold interval after the first timing, change the third positions using at least one feature point included in the one or more third images.

For example, the processor may be configured to identify the first position and the second position of the external object captured in the time section, by inputting the first image and the second image to a model to recognize the external object.

For example, the electronic device may further comprise a display. The processor may be configured to display a screen for reproducing the video in the display. The processor may be configured to, in a state that one image among the plurality of images is displayed within the screen based on an input indicating to reproduce the video, display a visual object indicating a position of the external object, as superimposed on the image displayed in the display based on the labeling information.

For example, the processor may be configured to wherein the processor is configured to, in the state of displaying one image among the one or more third images in the display, identify an input indicating movement of the visual object. The processor may be configured to, based on the input, adjust, based on a position of the visual object moved by the input, a position of the external object corresponding to another image different from an image displayed in the screen among the one or more third screens.

As described above, according to an embodiment, a method of an electronic device may comprise identifying, from memory of the electronic device, a first position associated with an external object, among a plurality of images for a video and a first image at a first timing from the plurality of images. The method may comprise identifying, based on the first position within the first image, a second position associated with the external object within a second image at a second timing after the first timing from the plurality of images. The method may comprise obtaining, based on the first position and the second position, one or more third positions associated with the external object and corresponding to the one or more third images included in a time section between the first timing and the second timing. The method may comprise storing, as labeling information indicating motion of the external object identified in the time section of the video, the first position, the one or more third positions, and the second position.

For example, the obtaining may comprise obtaining the one or more third positions by interpolating, using a length between the first timing and the second timing, a first coordinate indicating the first position within the first image at the first timing, and a second coordinate indicating the second position within the second image at the second timing.

For example, the obtaining may comprise obtaining the one or more third positions by interpolating the first coordinate and the second coordinate based on timings within the time section of the one or more images.

For example, the identifying the second position may comprise identifying, by comparing one or more feature points included in a portion of the first image including the first position corresponding to the external object, and one or more feature points included in a second image corresponding to the external object, the second position within the second image.

For example, the obtaining may comprise, based on identifying the second position with respect to the second image at the second timing after a threshold interval after the first timing, changing the third positions using at least one feature point included in the one or more third images.

For example, the identifying the second position may comprise identifying the first position and the second position of the external object captured in the time section by inputting the first image and the second image to a model to recognize the external object.

For example, the method may further comprise displaying a screen for reproducing the video in a display of the electronic device. The method may further comprise, in a state that one image among the plurality of images is displayed within the screen based on an input indicating to reproduce the video, displaying a visual object indicating a position of the external object, as superimposed on the image displayed in the display based on the labeling information.

For example, the method may further comprise, in the state of displaying one image among the one or more third images in the display, identifying an input indicating to move the visual object. The method may further comprise, based on the input, adjusting, based on a position of the visual object moved by the input, a position of the external object corresponding to another image different from an image displayed in the screen among the one or more third screens.

As described above, according to an embodiment, an electronic device may comprise a display, memory and a processor. The processor may be configured to identify, in a state of displaying a first image of a video stored in the memory in the display, a first input indicating to select a first position associated with an external object within the first image. The processor may be configured to identify, by performing a first type of computation for recognizing the external object based on the first input, a second position associated with the external object within the second image, among a plurality of images for the video, after a time section beginning from a timing at the first image. The processor may be configured to obtain, by performing a second type of computation for interpolating the first position and the second position, third positions associated with the external object within one or more third images included in the time section. The processor may be configured to display, in response to a second input indicating to reproduce at least portion of the video included in the time section, at least one of the first image, the one or more third images and the second image in the display, and display a visual object that is superimposed on an image displayed in the display and corresponds to one of the first position, the third positions and the second position.

For example, the processor may be configured to repeatedly perform the first type of computation to recognize the external object based on one or more feature points, at each time section after the timing of the first image.

For example, the processor may be configured to perform the second type of computation to obtain the third positions, based on the first position, the second position, and timings of the one or more third images in the time section.

For example, the processor may be configured to store the first position, the third positions, and the second position as labeling information corresponding to the video, in the memory.

For example, the processor may be configured to store data indicating the timing of the first image in the labeling information in association with the first position.

As described above, a method of an electronic device according to an embodiment may include identifying a first input indicating selection of a first position associate with an external object within a first image, while displaying a first image of a video stored in a memory of the electronic device on a display of the electronic device. The method may include identifying a second position associated with the external object within a second image after a time section starting from the timing of the first image, among a plurality of images for the video, by performing a first type of computation for recognizing the external object, based on the first input. The method may include obtaining third positions associated with the external object within one or more third images included in the time section, by performing a second type of computation for interpolating the first position and the second position. The method may include displaying any one of the first image, the one or more third images, and the second image on the display, in response to a second input indicating reproduction of at least a portion of the video included in the time section, and displaying a visual object corresponding to any one of the first position, the third positions, or the second position, as superimposed on the image displayed on the display.

For example, the identifying of the second location may include repeatedly performing the first type of computation for recognition of the external object based on one or more feature points, at each time section from the timing of the first image.

For example, the obtaining the third positions may include performing the second type of computation for obtaining the third positions, based on timings of the one or more third images in the first position, the second position, and the time section.

For example, the method may further include storing, in the memory, the first position, the third positions, and the second position, as labeling information corresponding to the video.

For example, the storing may include storing data indicating the timing of the first image in the labeling information in association with the first position.

The above-described devices may be implemented as hardware components, software components, and/or a combination of hardware components and software components. For example, the devices and components described in the embodiments may be implemented using one or more general-purpose computers or special-purpose computers, such as a processor, a controller, an arithmetic logic unit (ALU), a digital signal processor, a microcomputer, a field programmable gate array (FPGA), a programmable logic unit (PLU), a microprocessor, or any other device capable of executing and responding to instructions. The processor may perform an operating system (OS) and one or more software applications performed on the operating system. Further, the processor may access, store, manipulate, process, and generate data in response to execution of the software. For convenience of understanding, it may be described that a single processor is used. However, those skilled in the art may understand that the processor may include a plurality of processing elements and/or a plurality of types of processing elements. For example, the processor may include multiple processors or one processor and one controller. In addition, other processing configurations such as parallel processors may be also possible.

The software may include computer programs, codes, instructions, or a combination of one or more thereof, and may configure a processor to operate as desired or may independently or collectively instruct the processor. The software and/or data may be embodied in any type of a machine, a component, a physical device, a computer storage medium, or apparatus to be interpreted by a processor or provide instructions or data to the processor. The software may be distributed on a networked computer system to be stored or executed in a distributed manner. Software and data may be stored in one or more computer-readable recording media.

The method according to an embodiment of the disclosure may be implemented in the form of program instructions executable by various computer means and recorded on a computer-readable medium. In such a case, the medium may be a continuous storage of a computer-executable program, or it may be a temporary storage for execution or download. Further, the medium may be various recording means or storage means in which a single hardware component or a plurality of hardware components are combined, and the medium is not limited to a medium directly connected to a certain computer system and may be distributed over a network. Examples of the medium may include a magnetic medium such as a hard disk, a floppy disk, and a magnetic tape, an optical recording medium such as a compact disc read only memory (CD-ROM) and a digital versatile disc (DVD), a magneto-optical medium such as a floptical disk, and a read only memory (ROM), a random access memory (RAM), a flash memory, and the like configured to store program instructions. Further, examples of other media may include recording media or storage media managed by an application store that distributes applications, a site that supplies or distributes various other software, a server, and the like.

Although embodiments have been described above by way of limited embodiments and drawings, it will be understood by those of ordinary skill in the art that various changes and modifications may be made from the foregoing description. For example, the described techniques may be performed in a different order than described, and/or the components of the described systems, structures, devices, circuits, and so on may be combined or assembled in a different form than those described above, or substituted or replaced by other components or equivalents, while still achieving the desired results.

Thus, other implementations, other embodiments, and equivalents to the patent claims also fall within the scope of the patent claims described below.

## Claims

1. An electronic device, comprising:

    a memory; and
    a processor, wherein the processor is configured to:

    identify, from the memory, a first position associated with an external object, among a plurality of images for a video and a first image at a first timing from the plurality of images;
    identify, based on the first position within the first image, a second position associated with the external object within a second image at a second timing after the first timing from the plurality of images;
    obtain, based on the first position and the second position, one or more third positions associated with the external object and corresponding to the one or more third images included in a time section between the first timing and the second timing; and
    store, as labeling information indicating motion of the external object identified in the time section of the video, the first position, the one or more third positions, and the second position.

2. The electronic device of claim 1, wherein the processor is configured to:
    obtain the one or more third positions by interpolating, using a length between the first timing and the second timing, a first coordinate indicating the first position within the first image at the first timing, and a second coordinate indicating the second position within the second image at the second timing.

3. The electronic device of claim 2, wherein the processor is configured to:
    obtain the one or more third positions by interpolating the first coordinate and the second coordinate based on timings within the time section of the one or more images.

4. The electronic device of claim 2, wherein the processor is configured to:
    identify, by comparing one or more feature points included in a portion of the first image including the first position corresponding to the external object, and one or more feature points included in a second image corresponding to the external object, the second position within the second image.

5. The electronic device of claim 1, wherein the processor is configured to:
    based on identifying the second position with respect to the second image at the second timing after a threshold interval after the first timing, change the third positions using at least one feature point included in the one or more third images.

6. The electronic device of claim 1, wherein the processor is configured to:
    identify the first position and the second position of the external object captured in the time section by inputting the first image and the second image to a model to recognize the external obj ect.

7. The electronic device of claim 1, further comprising a display,
wherein the processor is configured to:

display a screen for reproducing the video in the display;
in a state that one image among the plurality of images is displayed within the screen based on an input indicating to reproduce the video, display a visual object indicating a position of the external object superimposed on the image displayed in the display based on the labeling information.

8. The electronic device of claim 7, wherein the processor is configured to:

in the state of displaying one image among the one or more third images in the display, identify an input indicating to move the visual object;
based on the input, adjust, based on a position of the visual object moved by the input, a position of the external object corresponding to another image different from an image displayed in the screen among the one or more third screens.

9. A method of an electronic device, comprising:

identifying, from a memory of the electronic device, a first position associated with an external object, among a plurality of images for a video and a first image at a first timing from the plurality of images;
identifying, based on the first position within the first image, a second position associated with the external object within a second image at a second timing after the first timing from the plurality of images;
obtaining, based on the first position and the second position, one or more third positions associated with the external object and corresponding to the one or more third images included in a time section between the first timing and the second timing; and
storing, as labeling information indicating motion of the external object identified in the time section of the video, the first position, the one or more third positions, and the second position.

10. The method of claim 9, wherein the obtaining comprises:
obtaining the one or more third positions by interpolating, using a length between the first timing and the second timing, a first coordinate indicating the first position within the first image at the first timing, and a second coordinate indicating the second position within the second image at the second timing.

11. The method of claim 10, wherein the obtaining comprises:
obtaining the one or more third positions by interpolating the first coordinate and the second coordinate based on timings within the time section of the one or more third images.

12. The method of claim 10, wherein the identifying the second position comprises:
identifying, by comparing one or more feature points included in a portion of the first image including the first position corresponding to the external object, and one or more feature points included in a second image corresponding to the external object, the second position within the second image.

13. The method of claim 9, wherein the obtaining comprises:
based on identifying the second position with respect to the second image at the second timing after a threshold interval after the first timing, changing the third positions using at least one feature point included in the one or more third images.

14. The method of claim 9, wherein the identifying the second position comprises:
identifying the first position and the second position of the external object captured in the time section by inputting the first image and the second image to a model to recognize the external obj ect.

15. The method of claim 9, further comprising:

displaying a screen for reproducing the video in a display of the electronic device;
in a state that one image among the plurality of images is displayed within the screen based on an input indicating to reproduce the video, displaying a visual object indicating a position of the external object superimposed on the image displayed in the display based on the labeling information.

FIG. 1A

FIG. 1B

ELECTRONIC DEVICE (101)

202

PROCESSOR (210)

DISPLAY (230)

MEMORY (220)

VIDEO (120)

LABELING INFORMATION (240)

FIG. 2

```
┌─────────────────────────────────────────────────┐
│         IDENTIFY A PLURALITY OF IMAGES FOR A VIDEO        │──── 310
└─────────────────────────────────────────────────┘
                         │
                         ▼
┌─────────────────────────────────────────────────┐
│              IDENTIFY A FIRST POSITION RELATED TO         │
│             AN EXTERNAL OBJECT IN A FIRST IMAGE AT        │──── 320
│           A FIRST TIMING AMONG THE PLURALITY OF IMAGES    │
└─────────────────────────────────────────────────┘
                         │
                         ▼
┌─────────────────────────────────────────────────┐
│      IDENTIFY A SECOND POSITION RELATED TO AN EXTERNAL    │
│     OBJECT IN A SECOND IMAGE AT A SECOND TIMING AFTER     │──── 330
│        THE FIRST TIMING AMONG THE PLURALITY OF IMAGES,    │
│                  BASED ON THE FIRST POSITION              │
└─────────────────────────────────────────────────┘
                         │
                         ▼
┌─────────────────────────────────────────────────┐
│        OBTAIN ONE OR MORE THIRD POSITIONS RELATED TO      │
│        THE EXTERNAL OBJECT AND CORRESPONDING TO ONE OR    │
│   MORE THIRD IMAGES INCLUDED IN A TIME SECTION BETWEEN    │──── 340
│      THE FIRST TIMING AND THE SECOND TIMING, BASED ON     │
│        THE FIRST POSITION AND THE SECOND POSITION         │
└─────────────────────────────────────────────────┘
                         │
                         ▼
┌─────────────────────────────────────────────────┐
│   STORE THE FIRST POSITION, ONE OR MORE THIRD POSITIONS,  │
│     AND THE SECOND POSITION, AS LABELING INFORMATION      │──── 350
│  INDICATING A MOTION OF AN EXTERNAL OBJECT IDENTIFIED     │
│            IN THE TIME SECTION OF THE VIDEO               │
└─────────────────────────────────────────────────┘
```

FIG. 3

FIG. 4

FIG. 5A

FIG. 5B

IDENTIFY A PLURALITY OF IMAGES FOR REPRODUCING A VIDEO — 610

OBTAIN LABELING DATA CORRESPONDING TO A-TH IMAGE AMONG THE PLURALITY OF IMAGES — 620

630

OBTAIN LABELING DATA CORRESPONDING TO (A+M)TH IMAGE AMONG THE PLURALITY OF IMAGES

IDENTIFY A POSITION OF THE EXTERNAL OBJECT RELATED TO A-TH IMAGE IN (A+M)TH IMAGE, BY COMPARING FEATURE POINTS OF A-TH IMAGE AND FEATURE POINTS OF (A+M)TH IMAGE — 632

634

A VISUAL OBJECT CORRESPONDING TO THE EXTERNAL OBJECT IS INCLUDED IN (A+M)TH IMAGE?

NO

636

OBTAIN LABELING DATA CORRESPONDING TO (A+M)TH IMAGE, BASED ON AN INPUT INDICATING SELECTION OF A POSITION IN (A+M)TH IMAGE RELATED TO THE EXTERNAL OBJECT

YES

GENERATE THE LABELING DATA CORRESPONDING TO (A+N)TH IMAGE, BASED ON THE LABELING DATA CORRESPONDING TO A-TH IMAGE AND THE LABELING DATA CORRESPONDING TO (A+M)TH IMAGE (0<N<M) — 640

650

PERFORM CALIBRATION OF THE LABELING DATA GENERATED

652

M EXCEEDS A THRESHOLD?

YES

654

CHANGE THE LABELING DATA CORRESPONDING TO (A+N)TH IMAGE BASED ON THE FEATURE POINT

NO

656

CHANGE THE LABELING DATA, BASED ON AN INPUT RECEIVED THROUGH A SCREEN FOR DISPLAYING THE VIDEO AND THE LABELING DATA

STORE THE LABELING DATA FOR A-TH IMAGE, (A+N)TH IMAGE AND (A+M)TH IMAGE IN ASSOCIATION WITH THE VIDEO — 660

FIG. 6

FIG. 7

800

| | |
|---|---|
| SENSOR(S) (803) | |
| IMAGE PREPROCESSOR(S) (805) | VEHICLE CONTROL MODULE (811) |
| DEEP LEARNING NETWORK (807) | NETWORK INTERFACE (813) |
| AI PROCESSOR (809) | COMMUNICATION UNIT (815) |

FIG. 8

FIG. 9

1000

CONTROL DEVICE

1030c

1022

MEMORY

1022a — INSTRUCTIONS

1022b — DATA

TRANSMITTER — 1030a

1032a

RECEIVER

1030b

1032b

DSP — 1070

COMMUNICATION
INTERFACE — 1080

1090

PROCESSOR — 1024

INSTRUCTIONS — 1024a

DATA — 1024b

FIG. 10

FIG. 11

OBTAIN A SET OF TRAINING DATA ~1202

PERFORM TRAINING ON A NEURAL NETWORK, BASED ON THE SET OF TRAINING DATA ~1204

1206

VALID OUTPUT DATA IS OUTPUT FROM THE NEURAL NETWORK?

NO

YES

USE THE TRAINED NEURAL NETWORK ~1208

FIG. 12

ELECTRONIC DEVICE (101)

MEMORY (1320)

NEURAL NETWORK (1330)

1332    1334    1336

PROCESSOR (1310)

TRAINING DATA SET (1340)

CAMERA (1350)

COMMUNICATION CIRCUIT (1360)

FIG. 13

START

OBTAIN AN IMAGE (1400)

IDENTIFY AN EXTERNAL OBJECT
IN THE IMAGE OBTAINED (1402)

CLASSIFY AN EXTERNAL OBJECT HAVING A
POSSIBILITY TO AFFECT VEHICLE DRIVING AMONG
THE EXTERNAL OBJECTS IDENTIFIED (1404)

ALLOCATE OBJECT IDENTIFICATION INFORMATION
TO EACH OF THE EXTERNAL OBJECTS CLASSIFIED (1406)

END

START TRACKING THE EXTERNAL OBJECT USING
IMAGE FRAME-BASED LINEAR INTERPOLATION (1408)

NO          1428

TARGET ID > N?          YES

IDENTIFY AN EXTERNAL OBJECT (TARGET ID = I) IN A FIRST IMAGE
FRAME ('I' IS A NATURAL NUMBER NO LESS THAN 1) (1410)

STORE INFORMATION ON THE IDENTIFIED EXTERNAL
OBJECT (TARGET ID = I) AND PERFORM LABELING (1412)

IDENTIFY ANOTHER EXTERNAL
OBJECT (TARGET ID = I+1) (1426)

NO

MOVE TO A FORWARD IMAGE FRAME (M-TH IMAGE FRAME),
BY THE NUMBER (M) OF INPUT IMAGE FRAMES (1414)

LABELING          1424
OPERATION FOR ALL THE
EXTERNAL OBJECTS EXISTING IN THE
IMAGE FRAMES IS
COMPLETED?          YES

IDENTIFY THE EXTERNAL OBJECT (TARGET ID = I)
IN M-TH IMAGE FRAME (1416)

STORE INFORMATION ON THE EXTERNAL OBJECT (TARGET ID = I)
IDENTIFIED IN M-TH IMAGE FRAME AND PERFORM LABELING (1418)

COMPLETE LABELING OPERATION
FOR EXTERNAL OBJECTS IN ALL IMAGE
FRAMES OBTAINED (1422)

STORE INFORMATION ON AN EXTERNAL OBJECT EXPECTED TO EXIST IN C-TH IMAGE FRAME AND
PERFORM LABELING, USING THE EXTERNAL OBJECT INFORMATION STORED IN A FIRST IMAGE FRAME
AND THE EXTERNAL OBJECT (TARGET ID = I) INFORMATION STORED IN M-TH IMAGE FRAME (1<C<M) (1420)

FIG. 14

FIG. 15

FIG. 16

| Tool version | 1.0.0 | 1702 |
| Image Path | example.jpg | 1704 |
| Image Width | 1280 | 1706 |
| Image Height | 650 | 1708 |

**Image Flags**

| Sunny day | TRUE | 1752 |
| Rainy day | FALSE | 1754 |
| Cloudy day | FALSE | 1756 |

1750

FIG. 17

FIG. 18

| Names | Examples |
|-------|----------|
| Points | [<br>(X1, Y1),<br>(X2, Y2),<br>(X3, Y3),<br><br>...,<br>(X19, Y19),<br>(X20, Y20)<br>] |

FIG. 19

FIG. 20

Europäisches
Patentamt
European
Patent Office
Office européen
des brevets

**EUROPEAN SEARCH REPORT**

Application Number

EP 24 18 1379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 973 028 B (10TH RES INSTITUTE OF CETC) 3 February 2023 (2023-02-03) * the whole document * ----- | 1-15 | INV. G06V10/82 G06V20/40 G06V20/52 |
| A | US 2023/046840 A1 (RAMANATHAN NARAYANAN [US] ET AL) 16 February 2023 (2023-02-16) * the whole document * ----- | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 3 October 2024 | Valencia, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 1379

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2024

| Patent document cited in search report | | Publication date | Patent family member(s) | Publication date |
|---|---|---|---|---|
| CN 114973028 | B | 03-02-2023 | NONE | |
| US 2023046840 | A1 | 16-02-2023 | NONE | |

For more details about this annex : see Official Journal of the European Patent Office, No. 12/82